# EUROPEAN PATENT SPECIFICATION

(11) **EP 1 540 945 B1**
(45) Date of publication and mention of the grant of the patent: **22.02.2012**
(21) Application number: 03754514.2
(22) Date of filing: 11.09.2003
(51) Int. Cl.: H04N 5/445

(54) **POINT-BASED SYSTEM AND METHOD FOR INTERACTING WITH ELECTRONIC PROGRAM GUIDE GRID**
AUF PUNKTEN BASIERENDES SYSTEM UND VERFAHREN ZUR INTERAKTION MIT EPG-RASTER
SYSTEME ET PROCEDE FONDES SUR DES POINTS PERMETTANT D'INTERAGIR AVEC UNE GRILLE DE GUIDE DE PROGRAMME ELECTRONIQUE

(30) Priority: 13.09.2002 US 65075
(43) Date of publication of application: 15.06.2005
(73) Proprietor: Research Investment Network, Inc., Irvine, CA 92614 (US)
(72) Inventor: ALLPORT, David, Palo Alto, Ca California 94303 (US)
(74) Representative: Kuhnen & Wacker
(86) International application number: PCT/US2003/028616
(87) International publication number: WO 2004/025951

(56) References cited:
- WO-A-98/38831
- WO-A-99/48287
- US-A1- 2002 087 982
- US-B1- 6 412 110

## Description

### FIELD OF THE INVENTION

The present invention relates generally to methods of interacting with displayed data, and more particularly to methods of interacting with electronic program guide (EPG) data in a displayed grid format.

### BACKGROUND OF THE INVENTION

Ever since there have been television channels, there has been a need to inform potential viewers about the programs that are scheduled to air on those channels. A "Program" is defined as a television broadcast program, satellite broadcast program, cable broadcast program, or any other program that is generally scheduled to begin airing at a predetermined time, and air for a predetermined length of time, as determined by the program content provider. The standard format seen for many decades in newspapers and other printed media uses a two-dimensional grid with rows corresponding to channels and columns corresponding to time periods. Supplementary program information is used to refer to additional information about an individual program, which typically includes more details about the program than merely its title and airing time. The supplementary information may include plot descriptions, names of actors, ratings, links to other sources of related information, etc. This basic grid format was also employed in early systems that displayed program information on television displays. Since the quantity of information describing the available programs at different times on different channels exceeded the available display space on a single TV screen, methods were employed to automatically "scroll" the grid either horizontally or vertically or both, to show programs at different times and different channels. However, these early systems suffered the drawback that the viewer was not in control of which program information was displayed at each time. This led to frustrating delays while viewers waited for the information they were interested in to appear.

Electronic Program Guides (EPG) were introduced, which allowed the user to be in control of which channels and displayed time period appeared in the grid. Furthermore, these interactive systems also allowed the user to control the display of supplementary program information, so that additional details of a selected program could be seen above, below or next to the main grid, in a manner analogous to the familiar printed program guides. Methods of displaying the supplementary program information include displaying it above, below, to the side or superimposed over the two-dimensional grid.

The provision of this type of interactive EPG required the introduction of techniques for indicating to the user which cell of the EPG grid was currently "active", in the sense that (a) the separate area of the EPG for displaying supplementary program information would contain supplementary information for the active cell, and also (b) the "active" cell was taken as the starting point for any "motion" of the displayed EPG grid, in the sense of scrolling the grid either horizontally or vertically to display new times or channels, or making a different cell "active".

Related techniques were well known in the field of computer programming for indicating an "active" cell in a two-dimensional spreadsheet. The active cell would appear "highlighted" in a different color (or reverse video in the case of early monochrome displays) from the other cells in the displayed grid, and information corresponding to the contents of the cell would appear in another area of the spreadsheet (typically above the grid).

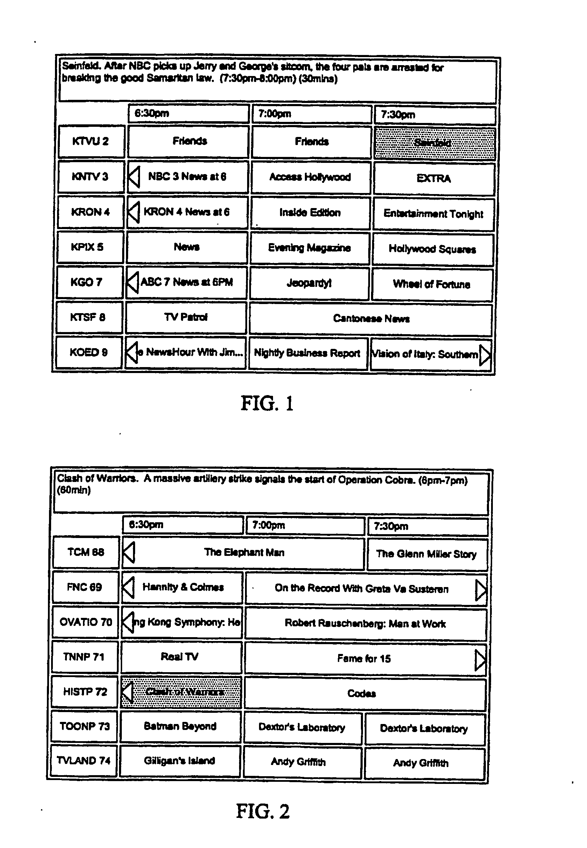

Figure 1 shows an example of this early type of interactive EPG wherein the grid's displayed period is from 6:30 p.m. to 8 p.m., and supplementary program information is being displayed above the grid for "Seinfeld", which is the program corresponding to the rightmost cell in the first row of the array. Several cells in the grid have indications that the programs they correspond to start at times before the beginning of the grid's displayed period (e.g. the news programs which start at 6 p.m.), and the rightmost cell in the last row of the grid has an indication that the program "Visions of Italy: (Southern style...)" ends at a time later than the end of the grid's displayed period.

The grid of Fig. 1 also illustrates that it is necessary for there to be a visual indication of the "active" cell, not only in order to provide feedback for moving the displayed portion of the grid horizontally or vertically, but also in order to identify which cell is related to the supplementary information. In the case of the program "Friends", there are two different episodes shown in the grid, and if there were no highlighting of the active cell it would be more difficult to distinguish which episode of the "Friends" (i.e. the 6:30->7:00 p.m. episode or the 7:00->7:30 p.m. episode) the supplementary program information was related to. This is directly analogous to the need in computer spreadsheets to have an indication of which cell data will be affected by data entry, if the data input part of the spreadsheet lies outside the grid of cells.

While it is possible to straightforwardly adopt navigation techniques from the field of computer-based spreadsheets for use in EPG navigation, this leads to several problems. EPG grids differ from computer spreadsheets in that the two-dimensional array comprises cells which have irregular sizes in the horizontal dimension, and these sizes may be different on each grid row. This contrasts with spreadsheet grids in which each cell in a given vertical column has an identical width. This irregularity leads to irregular movement of the active cell in response to user inputs.

The techniques known in the art of computer spreadsheets for moving the active cell around the grid (i.e. changing which cell in the grid is active at a particular time), and as a consequence of this movement, scrolling the displayed portion of the grid to show new cells in the horizontal or vertical dimensions, are as follows. If the new active cell is currently displayed in the grid, the user may simply use the computer mouse to click on the new cell to immediately make it active. If the new active cell does not appear in the current grid, the mouse may be used to click on horizontal or vertical scrollbars which appear outside the grid, thereby causing the grid to scroll horizontally or vertically to display new cells. After the target cell appears in the displayed portion of the spreadsheet, the user may then use the mouse again to directly click upon the target cell, thereby making it active. Alternatively, arrow keys on the computer's keyboard may be used to directly move the active cell in steps of one cell at a time, either horizontally or vertically, according to which key is used. If the active cell is at the boundary of the displayed portion of the grid (as in Fig.1), when a key is used to move the active cell to the right (or upwards), the entire grid will scroll in order to place the new active cell in the visible portion of the grid.

In the case of EPG grids displayed upon a TV screen, an equivalent of the computer mouse is typically not available, and user interactions to control the motion of the active cell are performed using buttons on a remote control. Therefore the only known techniques from computer spreadsheets which a re applicable for moving the active cell are those which correspond to the use of arrow keys on the computer's keyboard.

However, the adoption of techniques known from computer keyboard-based spreadsheet interactions has undesired effects when applied to EPG grids as illustrated in Fig. 1. For example, if the user uses the "right" movement key on the remote control key when the grid is in the state as shown, it is unpredictable as to how far the grid will scroll as a result of this input. The "Seinfeld" program ends at 8 p.m., and the spreadsheet-derived scrolling techniques will try to display all, or as much as possible, of the following cell when it is made active. In this case, if the program following "Seinfeld" on channel 2 is "Boston Public" (not shown), which airs from 8 p.m. to 9 p.m., in order to display all of this cell in the grid, it is necessary for the grid to scroll 60 minutes, so that the new grid displayed period will be from 7:30 p.m. to 9 p.m.

In contrast, if the currently active cell was the one displaying "Entertainment Tonight", which also airs from 7:30 p.m. to 8 p.m., the prior art navigation techniques would scroll the grid display so that the next program on channel 4 was displayed in the grid. In this case, the new active cell would correspond to the program "Frasier", which airs from 8 p.m. to 8:30 p.m. In order to make this cell fully visible, the grid display would only scroll 30 minutes, to display the period from 7 p.m. to 8:30 p.m.

Starting from the same grid display as in Fig. 1, if the currently active cell were the one corresponding to the "Visions of Italy: (Southern style ...)" program, which airs from 7:30 to 9 p.m., then in response to a user input moving the active cell to the right, the prior art navigation techniques would scroll the grid to show as much as possible of the following program on channel 9. In this case, the next program is "Visions of Italy: (Northern style)", which airs from 9 p.m. to 10:30 p.m. In this case, the grid would scroll 150 minutes, to show a new displayed period of 9 p.m. to 10:30 p.m.

Thus a single press of a "right" button on the remote control would cause the grid of Fig. 1 to scroll 30 minutes, 60 minutes, or 150 minutes, depending upon which cell was active prior to the user input. Moreover, the user would be unable to predict exactly how far the grid would scroll in each case just by looking at the information in Fig. 1, because the amount scrolled would depend upon the duration of subsequent shows which are not displayed in Fig. 1.

It should be noted that the program information in Fig. 1, and in all subsequent figures of this disclosure, represents actual program information occurring in the AT&T cable lineup in Palo Alto, California as provided by the well-known supplier of such information, Tribune Media Services. This data is typical of TV program data throughout the world.

Similar problems occur when scrolling EPG grids to the left using navigation techniques known from computer spreadsheets. With the "Clash of Warriors" cell active in the grid of Fig. 2, a user input requesting a leftwards movement of the active cell would result in a scroll of 90 minutes, to give a grid display period of 5 p.m. to 6:30 p.m., in order to show the previous episode of "Clash of Warriors" on channel 72 which airs from 5 p.m. to 6 p.m. In contrast, if "Batman Beyond" were the active cell, the same user input would cause a scroll of only 30 minutes, giving a displayed period of 6 p.m. to 7:30 p.m., in order to show the program "Dragon Ball Z" which airs on channel 73 from 6 p.m. to 6:30 p.m. Similarly, since the program preceding "Elephant Man" on channel 68 airs from 3 p.m. to 5 p.m. it will be readily understood how the same "move left" user input will cause grid scrolling of 180 minutes if "Elephant Man" is the active cell.

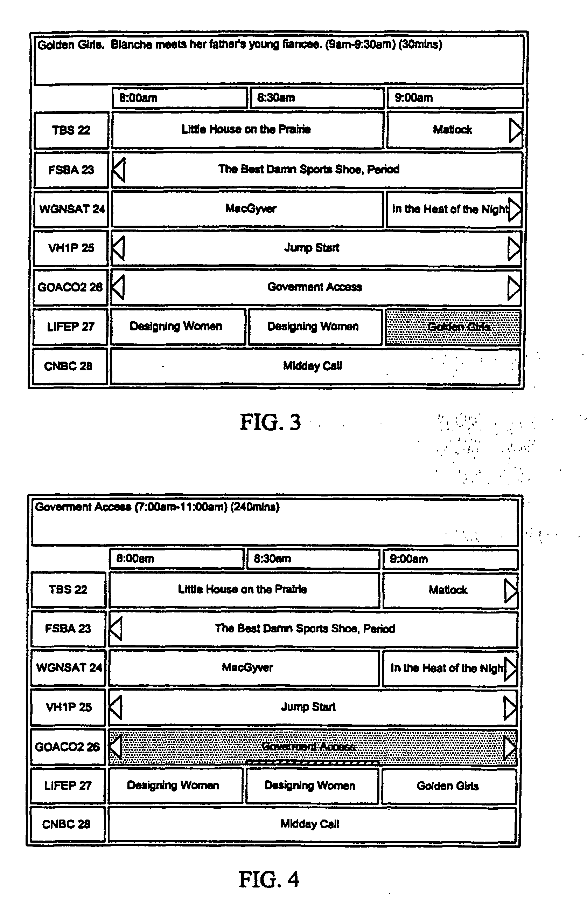

Moreover, the unpredictability of grid scrolling as a result of prior art navigation techniques derived from computer spreadsheets is not just limited to horizontal navigation. When the active cell is moved upward in the EPG grid of Fig. 3, no grid scrolling will occur when the active cell corresponds to the programs for channels 26 and 25. This is because although the entire broadcast time of the programs on these channels is not shown, the cells occupy the entire horizontal span of the grid already. However, since the prior art method derived from computer spreadsheets is to always display as much as possible of the active cell in the grid, when the user inputs a request to scroll the active cell "up" from channel 25 to 24, this will also result in a *horizontal* motion of the grid, to show a new grid displayed period of 8:30 a.m. to 10:00 a.m., containing all of the cell corresponding to the "In the Heat of the Night" program which runs from 9 a.m. to 10 a.m.

It is notable that some contemporary programs for displaying EPG grids on computers also have this unpredictable scrolling behavior, where user keyboard commands for "vertical" active cell movement result in arbitrary horizontal scrolling.

One attempt to solve unpredictability in scrolling behavior is an underlying logical grid of e qual-sized cells can be u sed to "constrain" the motion of the active cell, whose visual indication is called a "cursor" by limiting the motion of the cursor to equal-sized steps, corresponding to the size of cells in an underlying logical grid of equal-sized cells. Thus for grids as shown in Figs. 1 to 3 above, the underlying logical grid will have a cell size of 30 minutes. Every "right" input from the user results in a cursor movement of 30 minutes to the right, regardless of which cell is active. If the active cell is at the right edge of the displayed grid as in Fig. 1, a "right" input will always scroll the grid to a new displayed period of 7 p.m. to 8 :30 p.m. Similarly, every "left" input when the active cell is at the left edge of the grid as in Fig. 2 will scroll the grid to a new displayed period of 6 p.m. to 7:30 p.m., regardless of which channel row the active cell is on. Since program durations may exceed the cell size of the underlying equal-cell-sized logical grid, it may require multiple "left" inputs to move across a single program cell. For example, if the cursor shown in Fig. 3 were moved "up" to channel 26, the portion of the "Government Access" program considered to be "active" would correspond to the underlying logical cell for the time period 9 a.m. to 9:30 a.m. Two "left" input commands from the user would be required to move the active cell to correspond to the underlying logical cell for the time period 8 a.m. to 8:30 a.m.

In order to disambiguate the position of the selected underlying logical cell with respect to the highlighted program c ell, a cursor, wherein the entire program cell is highlighted, but a visual indication (such as a 3D shadow on a portion of the cell's boundary) displays to the user the location of the currently selected underlying logical cell within the highlighted program cell. Fig. 4 shows an EPG grid according to this approach, which would result after one "up" user input and one "left" user input, starting from the grid display of Fig. 2. The cursor shown in Fig. 4 indicates that the selected underlying logical cell corresponds to the time period 8:30 a.m. to 9 a.m.

The aforementioned approach suggests an advantage over prior art because the EPG cursor movement becomes predictable, and in order for the user to move the cursor vertically and horizontally around the grid, it is not usually important for the user input commands to be made in a particular order, since the result of an "up" followed by a "left" command will normally be the same as the result of a "left" followed by a "up" command.

However, there are at least four distinct problems with the approach of tying cursor movement to an underlying logical grid of equal-sized cells. These problems are a result of the fact that whilst the majority of TV programs may have durations which are simple multiples of 30 minutes, and start times either at the beginning of an hour or at half past an hour, this is by no means universally the case.

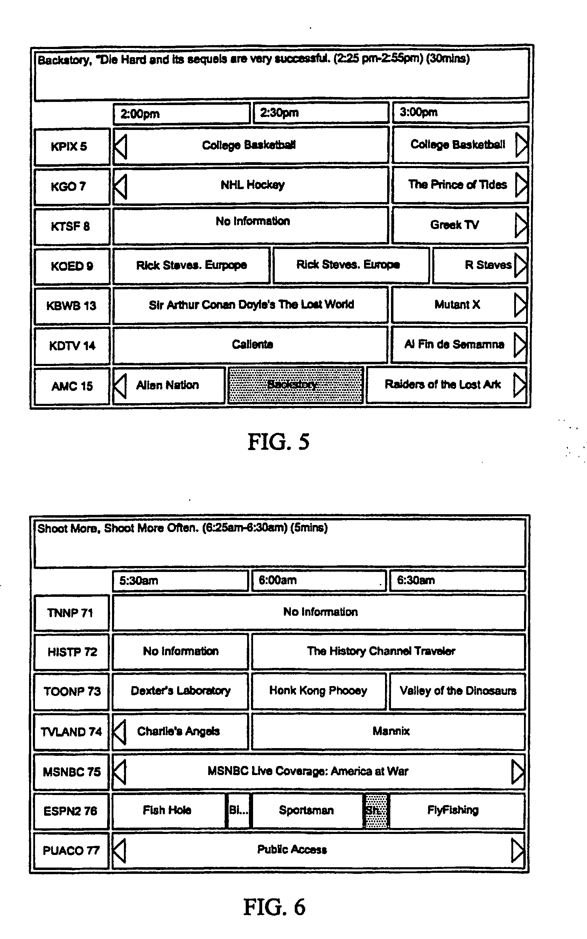

The first problem with the "underlying logical grid" approach of controlling navigation is that with actual EPG grids from commonly occurring TV schedules, many programs do not have start times which align with the beginning of an underlying logical grid cell. For example, Fig. 5 shows a grid containing the program "Backstory", which airs on the AMC channel from 2:25 p.m. to 2:55 p.m. It is preceded by the movie "Alien Nation" which airs from 12:30 to 2:25 p.m., and followed by the movie "Raiders of the Lost Ark" which airs from 2:55 p.m. to 5:00 p.m.

The duration of "Backstory", as well as the majority of programs made specifically for television, is an exact multiple of 30 minutes. However, "Backstory" is preceded and followed by two movies, whose creators generally have no concern for creating content which lasts an exact multiple of 30 minutes. Therefore in this case and many others, the start and end of the program is not aligned with the boundary of an underlying logical grid cell with 30-minute width. If "cursor" movement, or the movement of the indication of active program cell, were constrained to a size and locations defined by an underlying logical grid with equal cell sizes, it would not be possible to move around the grid without causing confusion to the user. For example, if the underlying logical grid comprises cells of 30-minute duration aligned with hour and half-hour boundaries, aligning the cursor with this grid would require that when highlighting the programs on AMC in Fig. 5, the cursor would be in one of three different positions; (a) highlighting the period from 2 p.m. - 2:30 p.m., which includes the last 25 minutes of "Alien Nation" and the first five minutes of "Backstory" or (b) highlighting the period from 2:30 p.m. to 3:00 p.m., which includes the last 25 minutes of "Backstory" and the first 5 minutes of "Raiders of the Lost Ark", or (c) highlighting the period from 3:00 p.m. to 3:30 p.m., which covers a half-hour period of "Raiders ..." starting 5 minutes into the movie.

Fig. 5 also shows another example of this same non-alignment problem, on KQED channel 9, where there are three consecutive 35-minute episodes of "Rick Steves Europe". It will be confusing to the user if the entire period from 2:30 p.m. to 3:00 p.m. is highlighted, since this covers two different episodes of the same show and it will not be obvious which episode is active. In other words, the user may not be able to readily determine which episode is being described by the supplementary program information display.

The second problem with this approach of using an underlying logical grid of equal-sized cells is that some programs may have durations that are less than the size of the underlying grid. In these cases it is impossible to constrain cursor motion to be always in steps whose size is equal to the cell size of the underlying grid. There are several examples of this problem in the grid of Fig. 6 on channel 76. The highlighting of the show "Shoot More, Shoot More Often" as shown in this figure can only occur if the "cursor" or visual indicator of the active cell is allowed to have a width corresponding to 5 minutes, and a location corresponding to the time 6:25 to 6:30 a.m. The only way that this would be possible under the constraint that cursor size and position must match positions and locations in an underlying logical grid of equal-sized cells, would be if that underlying grid had cells of width equivalent to 5 minutes duration. However, this would in turn imply that for a typical TV program of 30 minute duration, the user would be required to move the cursor by six five-minute steps in order to traverse the 30 minute cell, which would clearly be excessively laborious.

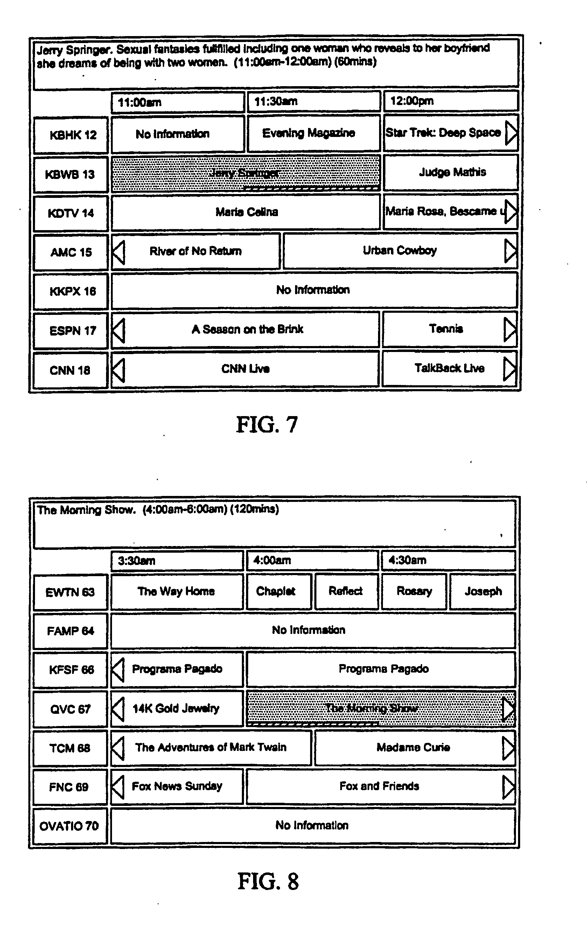

The third problem that arises when using this approach of constraining cursor motion to an underlying logical grid of equal-sized cells, is that when programs on one row of the grid do not align with logical cell boundaries, vertical motion between that other row and that row is unpredictable. Thus even if it were proposed to relax the constraint that the cursor highlight should match an underlying equal-cell-sized logical grid, to allow "exceptions" in the case of programs whose duration is not a multiple of the underlying cell width, there would still be a problem in transitioning between parts of the grid that constituted "exceptions" to the primary logical-grid constrained motion, and other parts of the grid that behaved according to the "normal" logical-grid constrained methods. Fig. 7 shows an example grid where the currently active cell corresponds to the "Jerry Springer" program, which airs from 11 a.m. to noon, and there is a cursor indicating (in this case via darker shading below the latter part of the program highlight) that the part of this cell which is currently "selected" corresponds to the period from 11:30 a.m. to noon. It is obvious that if the user gives a "down" command input under these circumstances, the highlighted cell should become "Maria Celina" with a "selected" period of 11:30 a.m. to noon. However, it is not at all obvious what should happen in response to a further "down" input from the user. Should "River of No Return" be highlighted, with the last part (30 minutes or less?) selected, or should "Urban Cowboy" be highlighted, with the first part (30 minutes or less?) selected?

Thus it can be helpful in some cases to introduce an underlying logical grid with equal-sized cells as described in the prior art for navigating EPG grid displays. But that approach has the drawback of also introducing several new user interaction problems. These problems may occur together in the same grid, as shown in Fig. 8. If an underlying grid with 30-minute cells were used, all three problems noted above of (a) programs not aligned with underlying logical cell boundaries, (b) programs having durations less that the logical cell size, and (c) unpredictable vertical motion would occur.

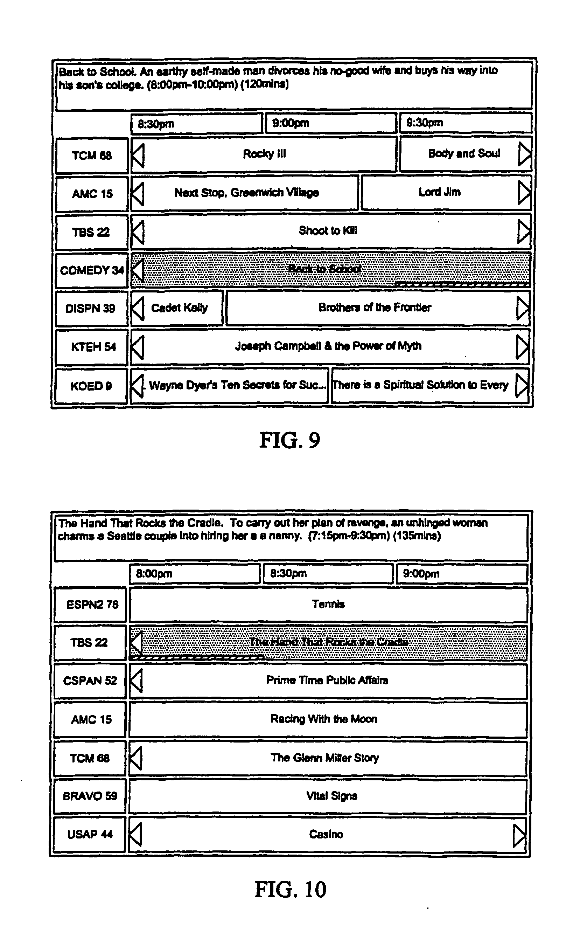

Furthermore, constraining cursor motion to equal-sized cells creates a fourth new problem, as illustrated in Fig. 9, wherein the user is required to enter an excessive number of horizontal scrolling commands in order to display supplementary program information for a new program.

It is known to allow viewers to customize EPG guides to show information for only a subset of the channels that are available. Users may s elect a few "favorite" channels that often contain programs of interest to them. For a user who likes watching movies and other shows that tend to have extended durations, it may often occur that at a particular time of day, all the channels of interest to the user are airing shows that are of greater duration than the EPG grid's displayed time period (which is typically 90 minutes). Fig. 9 shows actually occurring data for such a subset of channels. The 30-minute period from 9:30 p.m. to 10:00 p.m. on channel 34 is shown as selected according to the prior art highlighting methods. In this case, restricting cursor movements to equal-sized steps corresponding to an underlying grid of 30-minute cells requires the user to issue four "left" commands in order to see supplementary program information for a preceding show on this channel. This is because the previous show on channel 34 runs from 7:30 to 8:00 p.m., and so four movements of a 30-minute cell size are necessary to select that time period. A similar problem arises when the program "Joseph Campbell & the Power of Myth" is selected on channel 54. That program runs from 7:30 p.m. till 11:15 p.m., and therefor from a starting grid that has the time period from 9:30 p.m. to 10:00 p.m. selected, it will require five "left" commands to display information for the preceding show on that channel, and three or four "right" commands to display information for the following show (depending upon what policy is adopted for cursor movement to programs which do not start on logical grid cell boundaries, as discussed above). It will readily be understood how similar problems arise on other channels displayed in the grid of Fig. 9. Starting from a selected time period of 9:30 to 10:00 p.m., it requires four "left" commands to reach the preceding program on channel 22, two or three "left" commands for channel 39, and one or two "left" commands for channels 15 and 9.

With the "underlying logical grid" approach of constraining cursor movement, every show of duration greater than the logical cell size requires multiple user input commands for its traversal, and therefore for an underlying logical cell size of 30 minutes, every two hour movie requires four user inputs. This problem is of course much worse if a smaller cell size is chosen for the underlying logical grid.

Fig. 10 shows an example where such a requirement for multiple user-input commands to scroll the grid is clearly unjustified. Since all the shows in the grid of Fig. 10 last at least until 9:30 p.m., it is unnecessary to require the user to input at least three "move right" commands in order scroll the grid from a state as shown where the 8:00 to 8:30 p.m. time period is selected, to a state in which new supplementary program information is displayed for a given channel. There is no reason to make a distinction between selecting different sub-periods of the displayed time period for the grid of Fig 10, other than to make an ultimately doomed attempt to impose a consistent navigation policy based on an underlying logical grid of equal-sized cells.

Thus in many cases of actually occurring EPG grids, the introduction of an underlying logical grid of equal-sized cells with the aim of "constraining" cursor motion is counterproductive. Since the mapping to the underlying grid cannot be consistently applied due to the widely variable durations a nd start times of TV programs, it is unhelpful as a general solution to EPG grid navigation.

Previous systems for navigating an EPG grid displayed on a TV screen using a remote control for user input have employed some form of "cell highlighting" approach, where a two-dimensional area of the grid corresponding to an extended time period of a particular TV program is visually distinguished from the rest of the grid. The period of time typically used for cell highlighting has been at least 30 minutes, and the irregularity of durations and start times of TV programs has given rise to problems in moving the highlighted time period around the cells corresponding to program information displayed in the grid.

Accordingly, there is a need for an improved means of navigating EPG grids, that (i) can be consistently applied to any actually occurring program data whilst providing a highly efficient user interaction, that (ii) clearly indicates to the user the relationship between the supplementary program information display and the currently active program, and that (iii) solves the problems of unpredictability when scrolling horizontally and vertically. The present invention satisfies these needs, as well as others, and overcomes the deficiencies found in existing systems.

US 2002/0087982 A1 discloses an electronic program guide with rapid time advancement feature wherein a viewer can use a time line to advance an EPG hours, days, weeks and/or months in the future to a desired day and time. The viewer can then advance the time window of the EPG as is conventionally done in one-half hour increments to view desired program listings.

WO-A-98/38831 discloses a television control interface with electronic guide wherein an on-screen menu method and system for controlling the functions of integrated electronic devices and a television schedule system and method for displaying television schedule information on a television screen includes a program guide having a schedule information area that depicts the programs that are being presented on each channel at each time during the day and an interconnected series of menus to control the features of the integrated electronic devices. An input device allows the viewer to move a pointer over different interactive areas of the guide and the functions performed when the area is activated is displayed in a contextual help window. Various control glyphs provide for recursive interaction with the guide.

JP-A-2000295558 discloses a device and method of broadcast program recording and reproduction and computer-readable recording medium recording computer program for recording and reproducing broadcast program. In order to obtain a broadcast program recording device that is provided with an electronic program guide that displays and operates broadcast programs and recorded programs without distinguishing them by allowing the electronic program guide to handle a private channel consisting of recorded programs as one channel in addition to broadcast channels. Therefore, JP-A-200029558 discloses a private channel line 157 consisting of recorded programs and recording reservation programs is displayed on a program guide menu 151 in addition to a broadcast program guide 156. The recorded programs of the private channel are arranged in the order of recording date and time. In the private channel, the time position of a recorded program which was reproduced lastly is stored in cross-reference with a current position and displayed by matching this position with a current time line 161 on the broadcast program guide 156. A user uses a program selection cursor 162 to select broadcast programs and recorded programs without distinguishing them so as to attain operations such as viewing, reproduction and recording reservation.

### SUMMARY OF INVENTION

The present invention relates generally to methods of interacting with electronic program guide (EPG) data in a displayed grid format. More particularly, it relates to methods of interacting with EPG grids wherein the user must use discrete commands such as move up, move left, etc. to change which grid cell is currently active. In cases where the currently active cell is already a cell at the edge of the EPG grid, and the user inputs a command which would move the active cell beyond the currently visible grid, this command not only makes the new cell active, but also causes the grid display to scroll either vertically or horizontally to include this cell in the visible portion of the grid. A typical use for these methods is in the situation where the user is viewing the EPG at a distance of several feet from the display on which the EPG is displayed, and user commands for grid navigation are made via a remote control.

The invention provides an efficient method of EPG grid navigation that can be consistently applied to any actually occurring program data, in a way that is obvious to the user. This is achieved by providing a simple and consistent relationship between user input commands and changes in which program cell of the grid is active, as follows.

According to a first aspect of this invention, the visual indication of which cell is currently active in the EPG grid relies upon a graphical element corresponding to a single point in time, instead of relying upon two-dimensional cell highlighting corresponding to a *period* of time as commonly seen. This graphical element visually indicates a point within the grid's current displayed time period that is currently "active". It may also uniquely identify which grid cell is currently active, or it may identify the currently active grid cell only in combination with a different visual indication of the currently active grid row. Thus in the typical EPG grid arrangement wherein the horizontal axis of the two-dimensional array represents time and the vertical axis represents channel, the current invention provides a graphical element whose horizontal position corresponds to a single point in time within the grid's displayed time period. According to the invention, it is always completely apparent to the user which program will become active in response to an "up" or "down" input command; it will simply be the program that is airing at the point in time corresponding to the current horizontal position of the visual indicator, in the row above or below the currently active row. In response to "left" or "right" input commands, the newly active program will be the one which immediately precedes or follows the currently active program on the currently active grid row. Thus according to this invention, no more than one user input command is ever required in order to make a new program cell active.

The invention clearly indicates to the user the relationship between the supplementary program information display and the currently active program. According to a second aspect of the invention, the active program cell may be indicated by the intersection of the visual indicator of the active point in time and a currently active grid row. In a typical arrangement of the EPG grid, the vertical axis represents TV program source or channel, and immediately to the left of the grid there is a vertical list of axis labels whereby channel names and/or numbers are associated with the rows in the grid. In this arrangement, the active grid row may be visually indicated to the user in a variety of ways, including but not limited to, the following:
(a) If the visual indicator of the currently active point in time takes the form of a vertically oriented line, hereinafter called an "information line", the segment of the information line which intersects with the active grid row may be highlighted by using a different color or line style (e.g. dotted, dashed, etc.).
(b) the label for the currently active grid row (i.e. the source name and/or channel number) may be highlighted by using a different color, font, textured background, etc.
(c) the entire row of the grid may be highlighted by using a different color, font, textured background, etc.
(d) additional graphic elements may identify the intersection between a vertically extended information line and the active grid row.

The invention solves the problems of unpredictability when scrolling horizontally or vertically within an EPG. As noted above, the use of a graphical element which corresponds to only a single point in time provides for completely predictable vertical scrolling. In the embodiment where this graphical element takes the form of a vertically extended information line, it can immediately be seen, from the intersection between the information line and the target row, which program will become active in response to a vertical movement command. When scrolling from the top or bottom row of the current grid to a row above or below which is not currently visible, the user will be able to predict that the displayed period of the grid will remain unchanged, that the location of the information line with respect to the displayed grid will also remain uncharged, and that the new active program will be the one at the intersection between the information line and the row above or below the currently active row.

When scrolling horizontally according to a third aspect of the present invention, movement of the indicator of the active program to an immediately preceding or following program always occurs in response to exactly one "left" or "right" input command from the user. However, according to the methods herein described, the displayed period of the grid always changes by the *minimum* amount required in order to provide a visible intersection between the visual indicator of the currently active point in time and a grid cell corresponding to at least some part of the new active program. As a result, the horizontal scrolling methods of the present invention lead to horizontal scrolling movements of EPG grids that are considerably less dramatic and unpredictable than methods used in the prior art, while still providing improved efficiency.

### BRIEF DESCRIPTION OF THE DRAWINGS

Fig. 1 is a diagrammatic representation of a typical EPG illustrating the problems with unpredictable horizontal scrolling to the right.
Fig. 2 is diagrammatic representation of another typical EPG illustrating problems with unpredictable horizontal scrolling to the left.
Fig. 3 is a diagrammatic representation of still another EPG illustrating problems with unpredictable horizontal scrolling as a result of vertical scrolling.
Fig. 4 is a diagrammatic representation of still another EPG with a differentiated sub-period of the highlighted cell.
Fig. 5 is a diagrammatic representation of an "underlying equal-sized cell" EPG illustrating the problems arising from the non-alignment of program start times with underlying logical cell boundaries.
Fig. 6 is a diagrammatic representation of another "underlying equal-sized cell" EPG illustrating problems arising from the presence of programs which have durations shorter than the time period corresponding to the underlying logical cell size.
Fig. 7 is a diagrammatic representation of still another "underlying equal-sized cell" EPG illustrating the unpredictability of vertical scrolling.
Fig. 8 is a diagrammatic representation of still another "underlying equal-sized cell" EPG illustrating multiple problems arising within the same grid.
Fig. 9 is a diagrammatic representation of still another "underlying equal-sized cell" EPG illustrating examples of multiple user inputs required to move the active program to the immediately preceding program.
Fig. 10 is a diagrammatic representation of still another "underlying equal-sized cell" EPG illustrating on every row, at least three user inputs are required to move the active program to the immediately succeeding program.
Fig. 11 is a flowchart for determining how to move the information line in response to a "move right" user input command in accordance with the present invention.
Fig. 12 is a diagrammatic representation of an EPG in accordance with the present invention, applied to the program data as shown in grid of Fig. 1.
Fig. 13 is a flowchart for determining how to move the information line in response to a "move left" user input command, in accordance with the present invention.
Fig. 14 is a diagrammatic representation of an EPG in accordance with the present invention, applied to the program data as shown in the grid of Fig. 2.
Fig. 15 is a diagrammatic representation of an EPG in accordance with the present invention, applied to the program data as shown in the grid of Fig. 3.
Fig. 16 is a diagrammatic representation of an EPG in accordance with the present invention, applied to the program data as shown in the grid of Fig. 4.
Fig. 17 is a diagrammatic representation of an EPG in accordance with the present invention, applied to the program data as shown in the grid of Fig. 5.
Fig. 18 is a diagrammatic representation of an EPG in accordance with the present invention, applied to the program data as shown in the grid of Fig. 6.
Fig. 19 is a diagrammatic representation of an EPG in accordance with the present invention applied to the program data as shown in the grid of Fig. 7.
Fig. 20 is a diagrammatic representation of an EPG in accordance with the present invention, applied to the program data as shown in the grid of Fig. 8.
Fig. 21 is a diagrammatic representation of an EPG in accordance with the present invention, applied to the program data as shown in the grid of Fig. 9.
Fig. 22 is a diagrammatic representation of an EPG in accordance with the present invention, applied to the program data as shown in the grid of Fig. 10.
Fig. 23 is a diagrammatic representation of an EPG in accordance with the present invention, showing an example of additional graphic elements for indicating the intersection between the information line and the active grid row.
Fig. 24 is a diagrammatic representation of an EPG in accordance with the present invention, showing an example of text "wrapping" around the moveable time/channel indicator as well as showing an example of the duration strip indicating it extends beyond the visual area of the EPG.
Fig. 25 is a diagrammatic representation of an EPG in accordance with the present invention, wherein the visual indicator of the currently active point in time extends from the currently active cell to the top of the grid.
Fig. 26 is a diagrammatic representation of an EPG in accordance with the present invention, wherein the visual indicator of the currently active point in time has no visually distinctive segment where it intersects the currently active grid row.
Fig. 27 is a diagrammatic representation of an EPG in accordance with an alternate embodiment of the present invention, wherein the visual indicator of the currently active point in time takes the form of a visually distinctive graphical element.
Fig. 28 is a diagrammatic representation of an EPG in accordance with an alternate embodiment of the present invention, wherein the visual indicator of the currently active point in time takes the form of an icon.

### DETAILED DESCRIPTION OF THE INVENTION

Referring more specifically to the drawings shown in FIG. 1 through FIG. 28 for illustrative purposes, and to help provide a better understanding of the present invention, it will be appreciated that the system and method may vary as to configuration and as to details without departing from the basic concepts disclosed herein.

The first aspect of the invention is to redefine the relationship between form and function for visually indicating the currently active cell in an interactive EPG grid. Every cell in an EPG grid is associated with a particular program that airs on a particular channel starting at a particular time and ending at a later time, whose title (or other brief descriptor) appears in the cell. The channel and time axes of the grid, together with the location and size of each program cell, provide indications of the airing times, durations and channels for each of the programs displayed in the grid. The visual elements which indicate the currently active program perform two functions: first, they indicate an association between the active program and the information shown in the supplementary information display; second, they indicate the starting point of any grid navigation that would make a new program active and possibly thereby also scroll the grid to display new times or channels.

It has been commonplace to indicate which program is active by using a two-dimensional highlight with the following properties:
(a) it corresponds to a period in time that represents all of the airing period of the program that is displayed in the grid
(b) it may or may not have some areas which are distinguished from others, in order to indicate the selection of some sub-period of the displayed period
(c) it is limited to a single row of the grid display
(d) its width changes frequently as it is moved to program cells of different sizes
(e) its vertical motion between rows is in many cases visually erratic due to non-alignment of program cells on adjacent rows.

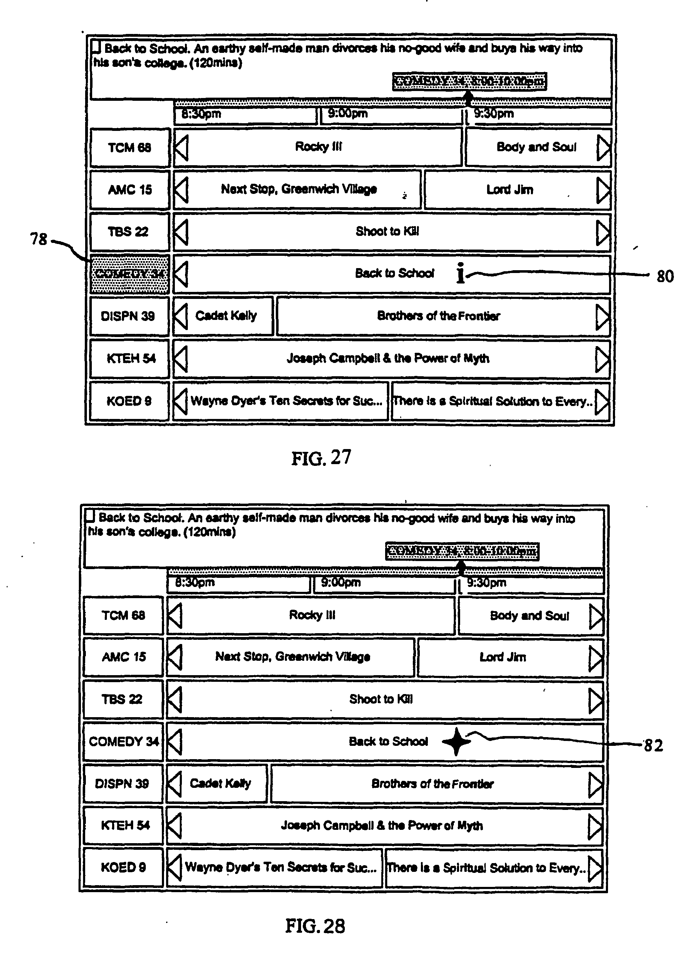

However, the current invention recognizes that neither of the two functions of the graphical elements which indicate the active program actually requires that these indicators have a two-dimensional form, and indeed that these functions may be more efficiently achieved using alternative graphical elements, which include a visual indicator of a currently active point in time, that has the following properties:
(a) it corresponds to a single point in time during the airing period of the associated program. It is important to note that, since the supplementary program information for any program is the same throughout its airing period, the visual indication of any point in time during the program's airing period is sufficient to achieve the function of associating that program with the information shown in the supplementary program information display. Moreover, the visual indication of any point in time during the program's airing period is also sufficient to achieve the function of indicating the starting point for grid navigation.
(b) in the typical arrangement it has no distinguishable parts in the horizontal dimension. Obviously, some horizontal extent is necessary in order to be visible at all. But even if the visual indicator takes the form of an icon which has a horizontal extent greater than that represented by a one-dimensional vertical line (for example corresponding to a period of several minutes along the horizontal dimension of the grid), its form will indicate which point within that period is the currently active one (see, for example, Fig. 28).
(c) it may take the form of a vertical line intersecting more than one row in the grid, and it may or may not have visually distinct parts in the vertical dimension where it intersects the currently active row of the grid
(d) it always has exactly the same size wherever it moves horizontally in the grid
(e) its vertical motion is always completely predictable. When it takes the form of a vertical line, icon, or other graphical element that only appears on one row of the grid, its horizontal position after a user request to move up or down is always exactly the same as its horizontal position before such a request. When it takes the form of a vertical line that extends only from the active program cell to the edge of the grid, there is an apparent vertical " motion" that consists of a lengthening or shortening of the line to reach to the new active cell, but there is no horizontal motion or change in horizontal size. When it takes the form of a vertical line intersecting all rows of the grid, it has no vertical motion, but in implementations where the intersection of the information line and the currently active row is visually distinguished (e.g. by color, line style, etc.), there may be a visual "motion" of the distinguished section of the line. This m ay occur in response to user "up" or "down" commands, and when it does, the "motion" will always be a simple one-dimensional movement along the information line, with no associated horizontal motion or change of size of any kind.

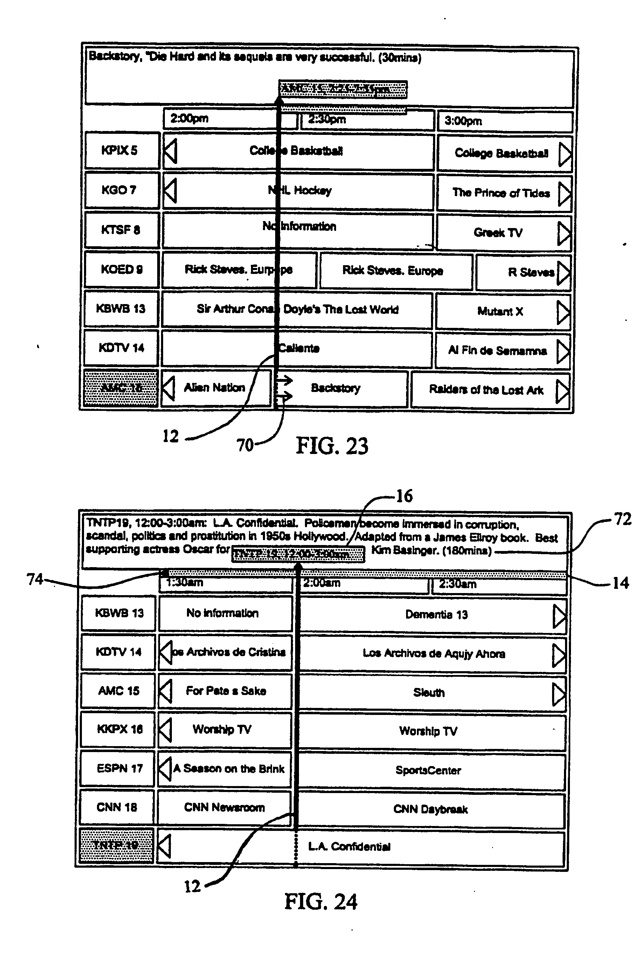

In a preferred embodiment, the visual indicator of the active point in time takes the form of an information line which has a section that is visually distinguished on one row of the grid (the "active row"), thereby uniquely indicating the active program. This visual distinction may be made by, for example, using a different color or line style (dotted, dashed, etc.). However, the active program may also be indicated by a combination of a homogenous information line with a separate indicator of the active row, or with a dditional graphic elements 70 as shown in Fig. 23. In a typical arrangement with channels corresponding to horizontal grid rows, a vertical information line at a position corresponding to a point in time within the grid's display period will intersect with an active horizontal row to identify a unique active cell. The currently active grid row may also be visually indicated by a variety of means, such as (a) highlighting the source name and/or channel number) by using a different color, font, textured background, etc., or (b) highlighting the entire row by using a different color, font, textured background, etc.

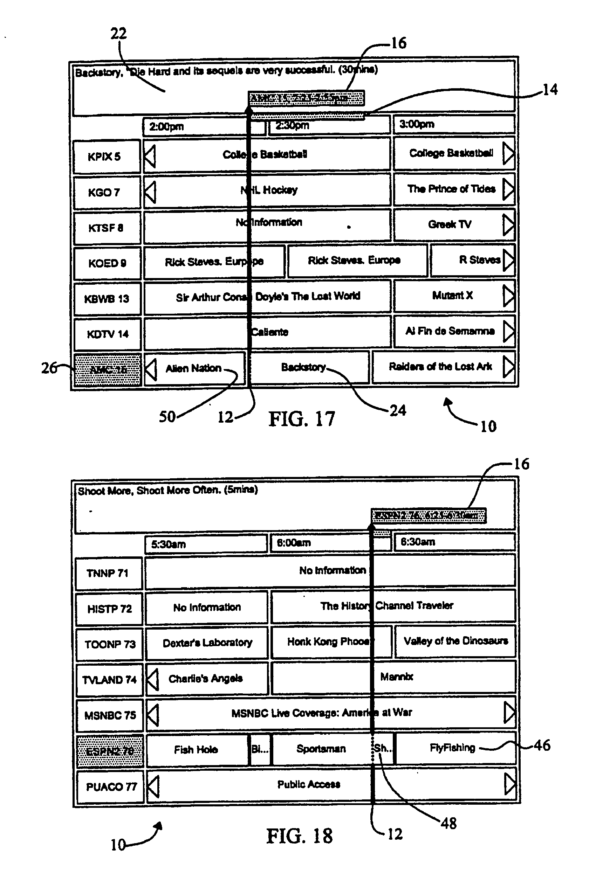

In another aspect of the present invention, the EPG may be augmented with other visual elements to assist in rapidly conveying to the user all the salient information about the active program. A first improvement is to reserve a movable area of the supplementary information display for a description of the source or channel name plus the start and end times of the program. In a preferred embodiment, this descriptive label is located directly above the information line, and the information line itself is extended past the top of the EPG grid, through the labels for the times corresponding to the different positions along the horizontal axis, and ends in a small arrow at the bottom of the area used for supplementary program information display. In the preferred embodiment, the left/right positioning of this additional channel/time indicator relative to the information line depends upon the position of the information line relative to the start of the active program. Thus if the information line is aligned with the left side of the active cell, the channel/time indicator will also have its left side a ligned with the information line. In the case where the information line intersects the middle of the active cell, the channel/time indicator will have its center aligned with the information line. If the width of the channel/time indicator exceeds a width corresponding to the duration of the active program, the indicator will have its left side aligned with a position corresponding to the start of the active program (see for example Fig. 18). The channel/time indicator may be visually distinguished from the rest of the supplementary information display by various means including but not limited to highlighted text, different fonts, different colored or textured background, etc. Since this indicator is movable and occupies a part of the supplementary information display, in a preferred embodiment the text in the rest of the supplementary information display (plot descriptions, actor names, etc.) "wraps around" the channel/time indicator area, as shown in Fig. 24, thus enabling efficient usage of the available display space. Fig. 24 shows an example where the text "Best supporting actress for Kim Basinger" has been wrapped around 72 the channel/time indicator 16. The necessary technology for wrapping text around rectangular areas is known from page layout for newspapers, magazines, etc.

Still yet another aspect of the present invention is to add a visually distinct strip above the labels along the time axis, whose position and width corresponds exactly to the portion of the active program's air time that is visible in the current grid. This provides an additional visual indicator of the start and end times of the active program. The preferred embodiment places this indicator above and immediately adjacent to the labels of the time axis, so that the correspondence between the beginning and end of the strip and the start and end times of the active program can readily be seen (see for example Figs. 17 and 18). In cases where either the start or end time of the active program (or both) are not visible in the grid, as shown in Fig. 24, this "duration strip" 14 may also have visual indicators 74 of that fact, analogous with the indicators known in the art which may be used at the beginning or end of grid rows. Fig. 24 illustrates an example where the duration strip indicates that "LA Confidential begins before 1:30 a.m.

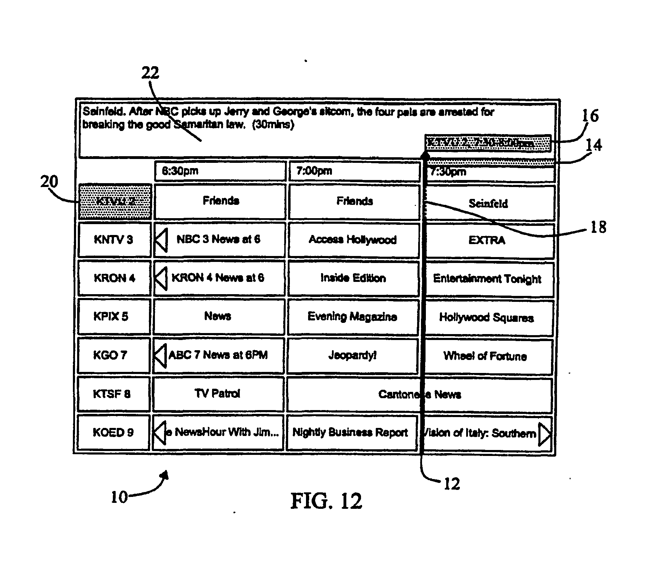

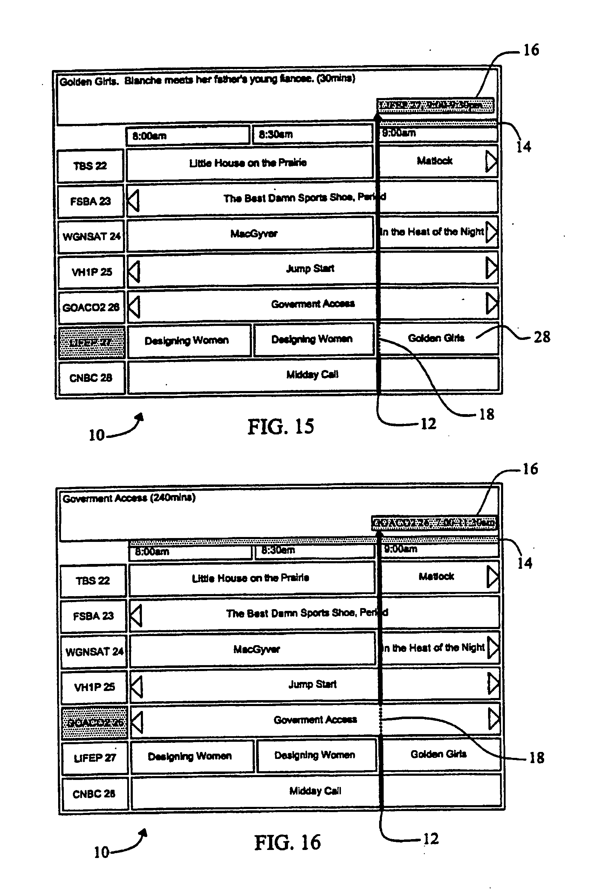

Fig. 12 and Figs. 14-21 show a grid 10 with an information line 12 in accordance with an embodiment of the current invention, together with the duration strip 14, enhanced descriptive label 16, a distinctive segment 18, an active row 20, and a supplemental information display 22. In particular, Figs. 16, 17, and 18 may be contrasted with Figs. 4, 5 and 6 to illustrate the visual differences between the information line 12 of the invention and the cell highlighting approaches.

Referring to Fig. 16, the information line 12 is positioned at 9 a.m. (details of the method for moving the information line in the horizontal dimension are given below). Information line 12 intersects the active row 20, which corresponds to channel 26, whose label is highlighted, and a visually distinctive segment 18 of the information line 12 is highlighted, which is shown by a dotted line in the figure. In this instance, the active program "Govemment Access" has no details other than the title, and the supplemental information display 22 contains the title, duration of the show, duration strip 14, and enhanced descriptive label 16.

Fig. 17 illustrates that presenting information for programs whose start or end times are not aligned with half-hour boundaries is not problematic for the point-based system of the present invention. The visual indicator of the active point in time, for example the information line 12, may intersect such program cells at either some point in between their start and end, or exactly at the start. In cases where the information line 12 intersects the active row 26 in the program grid 10 exactly at the place where one program ends and another begins (as in Fig. 17), the preferred embodiment of the invention selects the program which begins at the information line 12 as the active program 24. Preferably, the cells in the program grid 10 are drawn with borders that have a very small gap between them (e.g. the equivalent of one or two pixels of screen resolution), so that the information line 12, or other visual indicator of the active point in time, can be moved in such a way as to align exactly with the border of the starting program (in this case "Backstory"), to give the user the added visual cue that this is the active program. Note that in the preferred embodiment, the duration strip 14 and the enhanced descriptive label 16 in the supplemental information display 22 also reinforce this visual cue.

Fig. 18 illustrates information for programs with short durations, in a way that is consistent with the treatment of programs with longer durations.

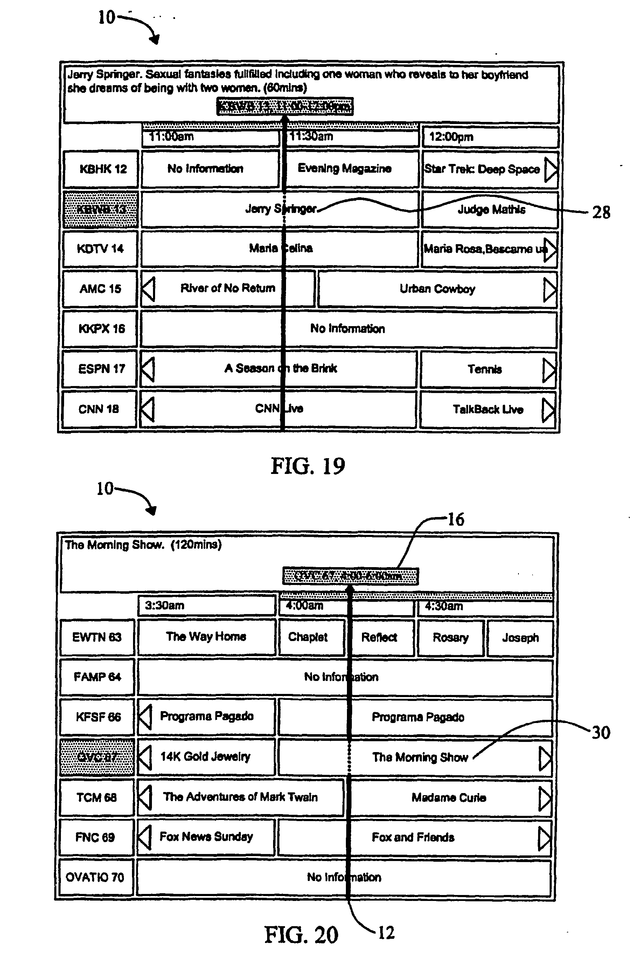

With regard to vertical scrolling, n one of the deficiencies that occur in existing systems a re encountered, since with the point-based approach, user "up" and "down" commands never cause horizontal scrolling as a side effect. Fig. 15 illustrates how a preferred embodiment of the invention displays the same data shown in Fig. 3, and the result of three "move up" user input commands from the starting position of Fig. 15 will simply be to place the visually distinctive segment 18 indicating the active program 28 at the beginning of the "In the Heat of the Night" cell. Furthermore, Fig. 19 illustrates the point-based approach to the same data as contained in the grid of Fig. 7, with the information line positioned at 11:30 a.m. and the active program cell being "Jerry Springer". As will be understood from the discussion of the horizontal scrolling methods discussed below, this situation may arise if the user scrolls to the start of the "Evening Magazine" program on channel 12, and then issues a "move down" command, which will result in the program grid 10 of Fig. 19. It is obvious that the results of two further "move down" input commands will be to make the "River of No Return" program active. Unlike prior art methods, there is no risk of the user expecting that "Urban Cowboy" will become active merely by vertical scrolling. Similarly, in Fig. 20, scrolling up three times from the cell showing the program "Moming Show" 30 will make the "Reflect" program active, while scrolling down will lead to "Madame Curie" being made active. The simplicity and clarity of these vertical scrolling behaviors is in marked contrast to the eccentricities of vertical scrolling encountered with the two-dimensional cell highlighting methods.

With horizontal scrolling in response to "left" or "right" input commands, the newly active program will be the one which immediately precedes or follows the currently active program on the currently active grid row. Thus according to this invention, no more than one user input command is ever required in order to make a new program cell active. The following description details the horizontal scrolling method when using an information line as the visual indicator of the active point in time, but it will readily be understood that the same method is applicable when the visual indicator of the active point in time takes another form, such as an icon or distinctive graphical element.

When scrolling horizontally left or right, there are two basic possibilities; the program to be made active either already appears (fully or partially) in the current program grid 10, or it does not. In the former case, all that is required is to move the information line 12 to a new position intersecting the new active program. In the latter case, where the n ew active program does n ot already appear in the current program grid 10, it is necessary to scroll the entire grid to display new times for the same set of channels. It is an object of the invention to provide improved efficiency in grid interaction, and therefore according to the methods of the invention, the displayed period of the grid always changes by the *minimum* amount necessary.

We define the minimum amount of necessary scrolling as the a mount required in order to provide a visible intersection between the information line 12 and the active program at a point corresponding to a time during the program's airing time. However, according to a preferred embodiment, there is a minimum duration of the program that should be made visible as a result of horizontal scrolling, whether or not some part of the target program's airing time is currently visible in the program grid 10. The motivation for this is that the function of the program grid 10 is to show titles or other brief descriptions of programs, and a certain amount of horizontal space is required in order to achieve this function. The actual amount of space required to display at least enough of a program's title to be informative will depend upon screen display size, font size, and typical viewing distance. However, in typical embodiments an example minimum duration to be displayed would be whichever is the less of 15 minutes or the program's full duration.

The scrolling methods described herein give rise to efficient grid interactions regardless of the durations of programs in the program grid 10. Typical interactions with EPG grids for normal TV viewing using only the "up", "down", "left" and "right" buttons on a remote control occur when the user wishes to perform one of three tasks:
(a) compare the programs available at the current time on different channels
(b) see information for other programs on a specific channel at later or earlier times
(c) change the EPG to display a later or earlier time in order to compare programs available at that time on different channels.

Since the EPG system cannot know the user's intention in advance, the navigation subsystem must allow for each of these tasks to be executed efficiently. As discussed above, the comparison of programs on different channels at a given time is extremely easy with our point-based approach to vertical scrolling. Horizontal scrolling may be performed *either* to just see different programs on the same channel *or* in order to change the grid's displayed time period in preparation for making a comparison of programs on different channels at an earlier or later time. The task of comparing programs at earlier or later times on a single channel is rendered maximally efficient by employing a method that always displays information for a new program in response to a single user input. The task of changing the EPG to display a later or earlier time, in order to compare programs available at that time on different channels, is rendered more efficient by also employing a method that always makes the *minimum* change in displayed time period that is required in order to display new program information. This is because it is impossible to predict in advance how far the user wishes to scroll the grid, and if the grid scrolls more than necessary in response to a single user input, there is a likelihood of an "overshoot", which will require backtracking and may be confusing to the user.

For the same reasons of efficiency, when responding to a "move right" command the interaction methods of the invention not only scroll the grid's displayed time period by the minimum amount necessary (which may be zero), but also move the information line by the minimum amount necessary. Since the goal of the "scroll right" process is to always display information for the program immediately following the currently active program in response to a single "move right" command, it follows that the system's response to a "move right" command will always be to align the information line with the *beginning* of the immediately succeeding program.

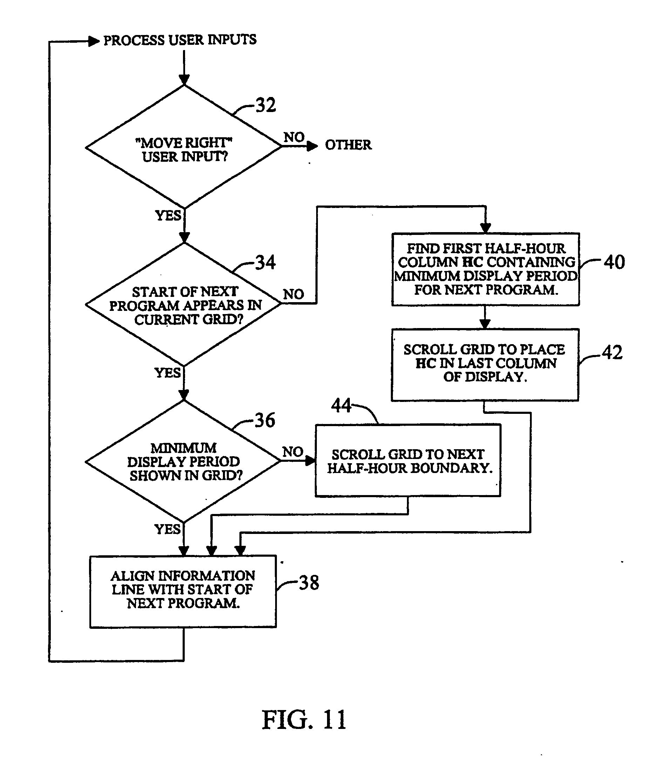

Referring now to Fig. 11, a flowchart for the system's response to a "move right" command 32 from the user is shown. If the start of the program following the currently active program is currently visible in the EPG grid 34, then the system checks whether the minimum display period is shown in the grid 36. In the preferred embodiment, the requirement for the minimum display period is met *either* by the end of the program appearing in the grid (in cases where the program's duration is 15 minutes or less) or at least 15 minutes of the program appearing in the grid. If the minimum period is displayed in the grid, then the system simply repositions the information line to align with the start of the next program 38. Otherwise, the system scrolls the entire grid such that the new grid displayed period begins 30 minutes later than the current grid displayed period 44 (which will guarantee that the minimum display period for the program is met), and then the information line is aligned with the start of the next program 38.

The motivation for constraining movement of *the displayed period of the grid* to multiples of 30 minutes according to the present methods is that this is the format which is familiar to the user. It has been the tradition in all forms of TV program grids, whether in newspapers, other print media, on computers, or displayed on TVs, to show columns along the temporal (horizontal) a xis with increments of 30 minutes, beginning with a time on a half-hour boundary (i.e. either on the hour, or on the half hour). It is important to distinguish this constraint on the scrolling motion of the *grid as a whole* to increments of plus or minus 30, 60, 90 minutes, etc., from the constraints on the scrolling motion of the *information line* which indicates the active cell. According to the present methods, the information line may be moved to *any* location on the horizontal axis, in steps of *any* length. The exact distance moved in each case and the exact position of the information line after responding to a "move right" command will depend only on the duration of the previously active program and the start time of the new active program (which in turn will be equivalent to the end time of the previously active program).

If the start of the next program is not visible in the current grid 34, the system will scroll the entire grid displayed period so that the new active program appears in the new grid display. The number of 30-minute increments to scroll the grid is calculated as follows. The system calculates the first half-hour period, after the end of the grid's current displayed period, which contains the minimum displayed period for the new active program 40. As discussed previously, the preferred embodiment defines the minimum displayed period to be the lesser of 15 minutes or the program's duration. Having identified this half-hour period (designated as HC), the system scrolls the grid to place it in the last (rightmost) column of the new grid 42. Therefore in the case where there are three half-hour columns in each grid, HC will be placed in the third column.

This method for responding to "move right" commands 32 may be further understood by referring to several examples. Referring to Fig. 18, the response to a single "move right" command from the state shown will be simply to relocate the information line to 6:30 a.m., making the program "Flyfishing" 46 active. In response to a further "move right" command, the system will determine that the immediately succeeding program is "(Hunt for) Big Fish", which airs from 6:55 p.m. to 7:00 p.m., and has an abbreviated title "Bi.." in the grid. Since the entire program duration is visible, the "minimum display period shown" criterion is met, and the information line will again simply relocate to 6:55 p.m. without causing the grid's displayed time period to change. In contrast, referring to Fig. 17, the program preceding "Backstory" 24 on AMC channel 15 is "Alien Nation" 50, which airs from 12:30 p.m. to 2:25 p.m. Therefore if the user were to start from a program grid 10 containing the channels as shown in Fig. 17, with AMC 15 as the active grid row 26, but with a grid displayed period of 12:30 p.m. to 2:00 p.m., the active program would be "Alien Nation" 50. From that state, no matter where the information line 12 was positioned, if the user issued a "move right" command, the system would determine that the start of the immediately following program ("Backstory") 24 did not appear in the displayed grid. In this case, however, the system would also determine that although the first half-hour period after the end of the grid's displayed time period does contain the start of "Backstory" 24, it does not contain the minimum display period for that program (since "Backstory" has a duration of 30 minutes). Therefore the HC would in this case be determined to be the period from 2:30 p.m. to 3:00 p.m., and this would be placed in the last column of the new grid. Thus the final result of the "move right" command would be similar to Fig. 17, with the information line 12 aligned with the start of "Backstory" 24, but with a grid displayed time period of 1:30 p.m. to 3:00 p.m.

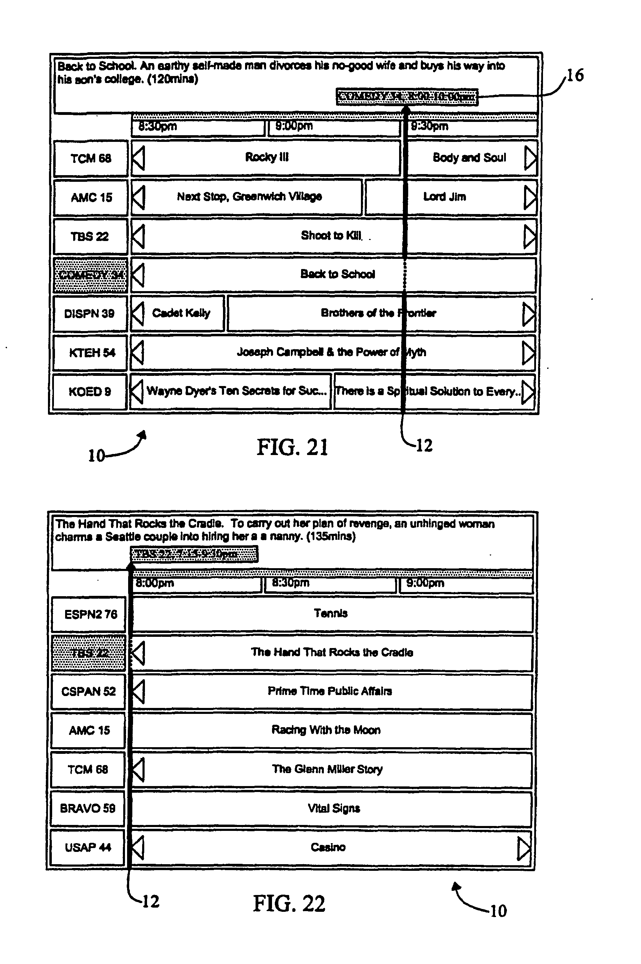

The differences between this method of responding to "move right" commands 32 and existing methods may be further understood by comparing scrolling behavior from Fig. 12 and Fig. 22 with Fig. 1 and Fig. 10, respectively. We noted previously that according to other known approaches, with "Seinfeld" as the active program in the grid of Fig. 1 a "move right" command would cause the grid to scroll 60 minutes to a new displayed time period of 7:30 p.m. to 9 p.m., making the entire 60-minute cell of "Boston Public" (not shown) highlighted. Prior known methods that constrain cursor motion to equal-sized 30-minute steps would scroll the grid of Fig. 1 only 30 minutes to a new displayed time period of 7:00 to 8:30 p.m., with a "selected" period of 8:00 to 8:30 p.m. Comparing this with Fig. 12, that applies the scrolling method of Fig. 1 1, the system would determine that the first half-hour period containing the minimum display period of "Boston Public" is from 8:00 to 8:30 p.m., and so the grid would scroll 30 minutes to give a grid display period of 7:00 to 8:30 p.m., leaving the information line at the 8:00 position. Different scrolling behavior is also observed in response to a "move right" command when starting from a similar grid to Fig. 1 wherein the "Visions of Italy (Southern Style)" program is selected. Unconstrained methods would scroll the grid 150 minutes to a new grid displayed period of 9:00 p.m. to 10:30 p.m., with the entire "Visions of Italy (Northern Style)" program cell highlighted. In contrast, the "underlying logical cell" methods would scroll the grid only 30 minutes, leaving the 8:00 to 8:30 p.m. period of the original program selected. The "logical cell" method would take two additional "move right" commands to make the 9:00 to 9:30 period of the following program selected. Comparing this with Fig. 12, the system would scroll the program grid 10 90 minutes to a new program grid display period of 8:00 p.m. to 9:30 p.m., with the information line 12 positioned at 9:00 p.m., the start of the new active program.

Turning to Fig. 10 and Fig. 22, the program immediately following "The Hand That Rocks the Cradle" on TBS channel 22 is "Guarding Tess" (not shown), which airs from 9:30 to 11:30 p.m. With "The Hand ..." active as shown in Fig. 10, an "unconstrained" response to a "move right" command would scroll the grid 10 90 minutes to give a grid display period of 9:30 to 11:00 p.m., with the entire visible period of the "Guarding Tess" program highlighted. In contrast, the underlying logical grid method would merely move the cursor to select the period from 8:30 to 9:00 p.m. without scrolling the grid, and without displaying any new program information. It would take two further "move right' commands to select the first half-hour period of "Guarding Tess". However, according to the methods of the present invention, the response to a "move right" command from the position of Fig. 22 is as follows; the program grid 10 is scrolled 30 minutes to give a new grid display period of 8:30 to 10:00 p.m., and the information line 12 is positioned at 9:30 p.m., aligned with the start of the "Guarding Tess" program.

Thus it can be seen that despite widely varying program start times and durations, the "move right" method proposed herein provides a scrolling behavior with greatly improved efficiency over other approaches. If is also important to note that the user is able to completely predict what the response will be to a "move right" input from information displayed in the current grid, in almost all circumstances. As previously noted, one of the problems with the "unconstrained" method is that the result of scrolling always depends upon the durations of the programs which are being scrolled to, and these may not be visible in the current grid. On the other hand, the "underlying logical grid" method is usually predictable (except in the problematic cases we have noted), but suffers from inefficiency. The methods of the present invention provide an improved combination of efficiency and predictability. The efficiency has been detailed in the case of "move right" behaviors. Predictability is provided in the following way. The result of a "move right" command is always to align the information line with the start time of the next program. On each channel/source row of the program grid this is the same as the end time of the current program, which in our preferred embodiment is always visible in the supplementary information display. It is therefore the case that the position of the information line 12 in response to a "move right" command will always be completely predictable from information that is visible in the current EPG display.

The amount of change in the grid's displayed period (if any) is also predictable from information visible in the current display, in almost all circumstances. For example, if the end of the currently active program is either on a half-hour boundary (the most common case), or at a time after a half-hour boundary which leaves at least the minimum program display period after the end of the show remaining before the next half-hour boundary, then the grid is guaranteed to scroll by an amount which leaves the end of the current show somewhere in the last column of the grid display. In our preferred embodiment, this will mean complete predictability if the currently active program ends either some time between the hour and 15 minutes past the hour, or sometime between half-past the hour and 45 minutes past the hour. The only circumstances under which there is less than total predictability from information visible in the current display are when (a) the end of the currently active program is not visible in the grid *and simultaneously* (b) the end of the currently active program is either at a time between 16 minutes past the hour and 29 minutes past the hour or at a time between 46 minutes past the hour and 59 minutes past the hour. Only under these circumstances does the amount of grid scrolling depend upon the duration of the following program which is not shown in the grid. Specifically, if under these conditions the following show has a duration short enough to display the entire program within a single half-hour column of the grid, then the grid will scroll to place the end of the current show somewhere in the last column of the grid display. If, on the other hand, the following show does not have such a short duration, then the grid will scroll to place the end of the current show somewhere in the middle column of the grid display, thereby guaranteeing that the minimum display period for the new active program is displayed in the new grid display.

The method herein presented for responding to "move left" commands also provides combination of efficiency and predictability. The details of the method of responding to a "move left" command are not completely symmetrical with the details of the "move right" method. T his is because when u sing the point-based approach, there are many instances when the information line may logically be placed *anywhere* within an active cell, without affecting horizontal grid scrolling or supplementary information display. An example is when scrolling within a particular EPG grid display (i.e. without scrolling the entire grid). In such cases, a choice must be made as to where to position the information line, and in the preferred embodiment we adopt the convention of always placing the information line at the *start* of a program, in preference to placing it at the end. The motivation here is to provide consistency with the other convention adopted in the preferred embodiment, which determines that if the information line is placed exactly at the boundary between two programs on the active grid row, it is to be understood as representing the program on its *right* as the active program (see the discussion of Fig. 17 above). This is also the most natural way of relating the visual elements of information line and active program title for languages like English which are written left to right: there is a natural interpretation of the information line as the place from which we start reading the information. Similarly, in cases where the start of the program does not appear in the program grid 10, but we have a choice of placing the information line 12 in any position on the horizontal axis without affecting the supplementary information display (as for example in when scrolling left to result in the program grid of Fig. 22), we adopt the convention of placing the information line at the start of the grid, rather than in an arbitrary place during the program's displayed period.

The asymmetry between the left and right scrolling methods may be summarized as follows: in both cases, efficiency considerations determine that *the grid as a whole* will be scrolled the minimum amount necessary (which may be zero) to display the minimum display period for the new active program. When scrolling right, the information line is also moved the *minimum* amount necessary, to align with the start of the new program. But when scrolling left, the information line is moved the *maximum* amount possible, in order to place it at or near the start of the new active program. However, when scrolling left, the method of the present invention never scrolls the entire grid merely in order to make the start of the new active program visible in the grid. Since the primary goal is to make the new program active, which can be achieved by forming an intersection between the information line and the active grid row *any* point during the program's displayed period (i.e. at any time during the program's air time that appears in the grid), it is unnecessary to have the start of the program visible in order to achieve this goal. Second, requiring that the start of the new active program always be visible in the grid after a "move left" command leads to inefficiencies in grid navigation as a result of scrolling "overshoot" as previously discussed. Therefore according to the method of the present invention, the result of scrolling left is always to place the information line *either* at the start of the new active program or at the start of the displayed period of the grid.

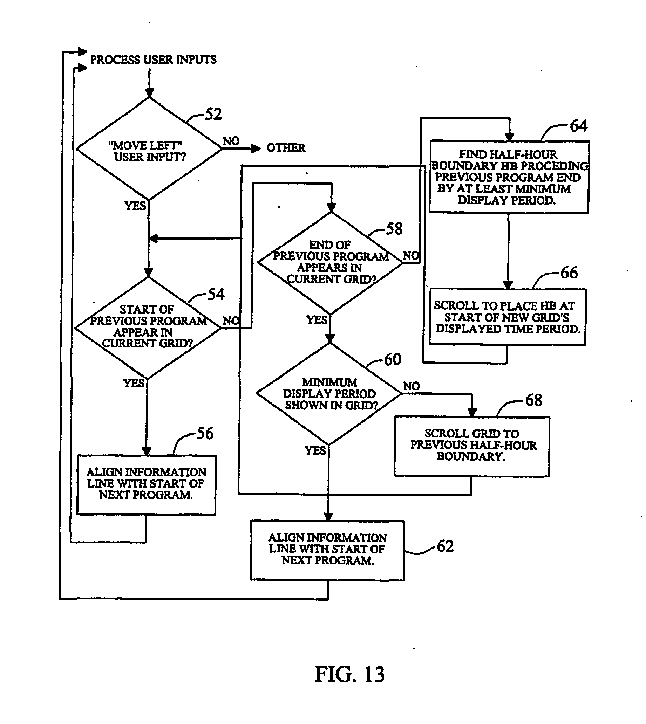

Referring to Fig. 13, the flowchart illustrates the details of the method for responding to a "move left" input command 52. If the program preceding the current active program, which is about to become the new active program, is already fully contained in the visible grid (i.e. both its start and end are visible) 54, then no grid scrolling occurs and the information line is simply aligned with the start of the new active program 56. If the start of the previous program does not appear in the current grid 54, but the program's end does 58, the grid may or may not be scrolled. In the preferred embodiment, if at least 15 minutes of the previous program appears in the grid, the grid is not scrolled and the information line is aligned with the start of the next program 62. However, if less than 15 minutes of the previous program appears in the grid, then the entire grid is scrolled to place the beginning of the grid's displayed time period 30 minutes earlier 68. This may now bring the start of the previous program into the visible part of the grid, and so the same decision process is followed with respect to the new grid, to align the information line with either the start of the program or the start of the grid (at this point, the minimum display period for the new active program is guaranteed to be visible, so no further grid scrolling will occur).

Returning to the case where, with respect to the original grid display, the end of the previous program does not appear in the visible grid; the system calculates the half-hour boundary HB that precedes the end of the previous (i.e. target "active") program by at least the minimum display period 64. This will be either (a) the half-hour boundary which is at least 15 minutes earlier than the start of the current active program, or (b) the half-hour boundary at or immediately preceding the start of the target active program. The half-hour boundaries (a) or (b) may be the same, but if they are different, HB is determined to be whichever one is later. The grid is then scrolled to place HB at the start of the grid's new displayed time period 66. This may or may not bring the start of the target active program within the new grid's displayed time period, and so as before the same decision process is followed with respect to the new grid, to align the information line with either the start of the program or the start of the grid (at this point also, the minimum display period for the new active program is guaranteed to be visible, so no further grid scrolling will occur).

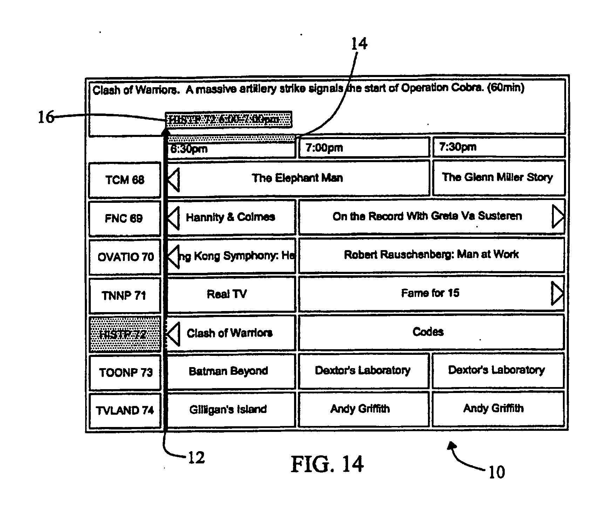

The method for responding to "move left" commands 52, and its improvement over prior art methods, may be further understood by comparing scrolling behavior from Fig. 14 and Fig. 21 with Fig. 2 and Fig. 9, respectively. Turning to Fig. 2, we have discussed above how the "unconstrained" method would respond to a "scroll left" command on Histp channel 72 by scrolling the grid 90 minutes to give a new grid displayed period of 5:00 to 6:30 p.m., with the whole of the previous episode of "Clash of Warriors" highlighted. In contrast, the "underlying logical grid" method would scroll the grid by only 30 minutes, but would fail to make a new program active - supplementary information would still be displayed for the same "Clash of Warriors" episode as before, but with the 6:00 to 6:30 p.m. sub-period of its airing time selected. However, according to the method detailed in Fig. 13, the grid of Fig. 14 would scroll 60 minutes to give a new grid displayed time period of 5:30 to 7:00 p.m., with the information line 12 positioned at the start of the n ew g rid (i.e. at 5:30 p.m., halfway through the airing time of the previous episode of "Clash of Warriors"). Similarly, if "Elephant Man" were the initial active program in Fig. 2, the "unconstrained" method would cause a grid scroll of 180 minutes to select the previous program. The "logical grid" method would again scroll by only 30 minutes, and would require an additional three "move left" commands 52 before reaching a display period of 4:30 to 6:00 p.m. and making the last half hour of the previous program selected. In contrast, the scrolling method shown in Fig. 13 starting from an initial grid 10 shown in Fig. 14 but with "Elephant Man" as the active program would produce the following result. In response to a single "move left" command 52, the program grid 10 would scroll 120 minutes to give a display period of 4:30 to 6:00 p.m., with the information line positioned at 4:30 p.m. intersecting the previous program.

Turning to Fig. 9, we noted previously that if the 9:30 to 10:00 p.m. sub-period of "Joseph Campbell & The Power of Myth" were selected according to the known "underlying logical grid" method, it would require five "move left" commands in order to select the previous program on channel 54 (with no scrolling of the grid's displayed time period happening at all in response to the first two inputs). On the other hand, according to the "unconstrained" method, if the entire visible period of "Joseph Campbell ..." were selected and the user gave a "move left" command, the grid would scroll 120 minutes to a new grid displayed period of 6:30 to 8:00 p.m., with the entire program "Antiques Roadshow" selected, which airs from 6:30 to 7:30 p.m. However, starting from a grid similar to Fig. 21 but with KTEH / channel 54 as the active grid row (and hence with "Joseph Campbell ..." as the active program), the response to a "move left" 52 command provided by the flowchart shown in Fig. 13 would be to scroll the grid 90 minutes, to a new grid displayed period of 7:00 to 8:30 p.m. The information line 12 would be positioned at 7:00 p.m., halfway through the new active program, aligned with the start of the new grid displayed time period.

Thus it can be seen that despite widely varying program start times and durations, the "move left" method herein also provides a scrolling behavior with greatly improved efficiency over other methods. In addition, as is the case with scrolling to the right, the user is able to completely predict what the response will be to a "move left' input 52 from information displayed in the current program grid 10, in almost all circumstances. Predictability is provided in the following way. With respect to the scrolling of the grid, no grid scrolling will occur if the minimum display period of the program preceding the currently active program is visible in the current grid, and it will be apparent to the user whether or not this is the case. If the minimum display period for the preceding program does not appear in the current grid, under the preferred embodiment the grid will always scroll to a new grid displayed period that starts less than 45 minutes before the start of the current active program (and this program start time, even if it does not already appear in the grid's current displayed time period, is visible in the supplementary information display). In cases where the current active program is aligned with a half-hour boundary, the new grid's displayed time period will start exactly 30 minutes before the start of the current active program. In a manner analogous to the "move right" method, a small amount of unpredictability occurs when the currently active program does not align with a half-hour boundaries *and* the previous program's duration is less than 30 minutes, but this has very little effect on the actual result of scrolling. The predictability of information line positioning from information that is visible in the current grid derives from the predictable scrolling of the grid as a whole. After any necessary scrolling has occurred, the information line 12 will be aligned with the start of the new active program if it appears in the program grid, or with the start of the grid if it does not. The overall effect of this is that the *absolute position* of the information line 12 in the program grid 10 after a "move left" command 52 is predictable from information that is visible in the current grid, even though the new position of the information line 12 *relative to the start of the new active program* is not always predictable, because the latter depends upon the duration of the previous program which is not shown in the initial grid. However, in order to efficiently navigate the program grid 10 according to the point-based method, it is not necessary to predict the new position of the information line 12 relative to the start of the new active program. Therefore the current methods provide an improved combination of both efficiency and predictability in navigation, for vertical scrolling and horizontal scrolling in both directions.

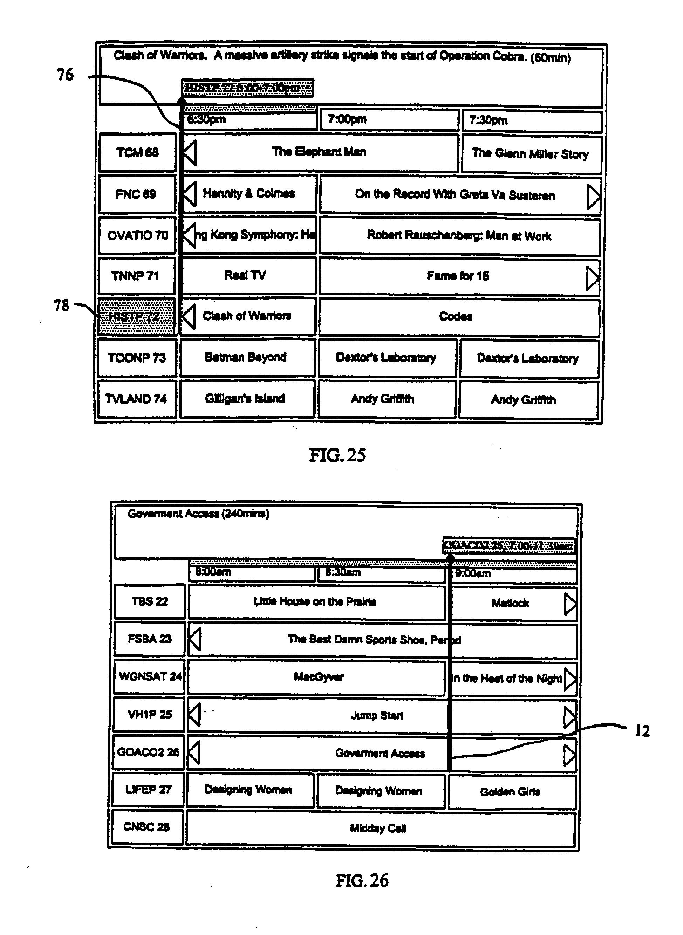

As noted previously, the visual indicator of the active cell may take various forms, but the navigation methods described are still applicable. In one embodiment, shown in Figs. 14-24, it appears as a vertically-oriented information line 12 which intersects through all the rows of the grid. In another embodiment shown in Fig. 25, a truncated information line 76 may extend only from the active program cell to the edge of the grid. In cases where the labels on the temporal axis are positioned at the top of the grid, the truncated information line 76 may extend upwards from the active cell to the top, as shown. There may be a visually distinct segment 18 of the information line 12, as shown in Figs 14-25, or there may be no such distinguishing segment in information line 12, as shown in Fig 26. Furthermore, in embodiments wherein the graphical element(s) used to indicate the currently active point in time also uniquely identify a single active cell, it is not necessary for the active grid row to be highlighted, as shown in Figs 26 and 28. Active grid row highlighting 78 can be seen in Figs. 25 and 27.

Still another form that the visual indicator of the active cell may take is a visually distinctive graphical element, for example, a letter 80 in a distinctive font and/or color, as shown in Fig 27. Yet another form it may take is an icon 82, as shown in Fig 28. Thus although the system states shown in Figs 21, 27 and 28 may be identical, they simply represent different embodiments of the visual indicator of the active point in time, which in turn indicates which grid cell is currently active.

Those skilled in the art will appreciate that the invention described herein may be implemented in a computer-readable medium. A computer-readable medium is any article of manufacture that contains data that can be read by a computer or a carrier wave signal carrying data that can be read by a computer. For example, the Point-Based System and Method for Interacting with EPG Grid may be distributed on magnetic media, such as floppy disc, flexible disk, hard disc, reel-to-reel tape, cartridge tape, and cassette tape; optical media, such as CD-ROM, CD-RW, DVD-ROM, DVD-RW; and paper media such as punch cards and paper tape, or on a carrier wave signal received through a network, wireless network, or modem, including RF signals and infrared signals.

While certain embodiments are illustrated in the drawings and have been described herein, it will be apparent to those skilled in the art that many modifications can be made to the embodiments without departing from the inventive concepts described. Accordingly, the invention is not to be restricted except by the claims which follow.

## Claims

1. An electronic program guide system comprising:
a program grid (10) including a plurality of cells, wherein each of said cells is associated with a particular program and can contain program information; and
a visual indicator (12; 80; 82) for indicating a currently active cell within said program grid (10) for displaying said program information contained in said currently active cell;
said program grid (10) including one horizontal axis representing time and one vertical axis, wherein said plurality of cells comprises a plurality of columns disposed along a horizontal axis and at least one row disposed along a vertical axis;
**characterized in that**
the position of said visual indicator (12; 80; 82) corresponds to a single point in time within said currently active cell, wherein said visual indicator (12; 80; 82) is movable along the horizontal axis and vertical axis; wherein a portion of said visual indicator specifying said active cell is visually different from another portion of said visual indicator; and
wherein said visual indicator is movable relative to the axes in response to user commands, and each up, down, left or right user command causes the visual indicator to move to and activate a different cell within the grid that is adjacent to the currently active cell, and wherein in response to a single user command, if the different cell is not currently visible in a currently displayed portion of the program grid, the single user command causes the system to scroll the plurality of cells in the program grid so that at least some part of the different cell is visible.

2. The system recited in claim 1, wherein said visual indicator is an information line (12).

3. The system recited in claim 2, wherein said information line (12) is vertically oriented.

4. The system recited in claim 2, wherein said information line (12) intersects a plurality of said cells.

5. The system recited in claim 4, wherein said information line (12) comprises a visually distinctive segment (18; 70) for indicating said currently active cell.

6. The system recited in claim 1, wherein said visual indicator is an icon (82).

7. The system recited in claim 1, wherein said visual indicator is a visually distinctive graphical element (80).

8. The system recited in claim 1, further comprising a visual indication of an active row (20) within which said active cell is contained.

9. The system recited in claim 1, wherein, in response to a user command to move said visual indicator (12; 80; 82) up, said visual indicator (12; 80; 82) is relocated to a new vertical position without changing said horizontal position.

10. The system recited in claim 1, wherein, in response to a user command to move said visual indicator (12; 80; 82) down, said visual indicator (12; 80; 82) is relocated to a new vertical position without changing said horizontal position.

11. The system recited in claim 1, wherein a first active cell within said grid is indicated, said first active cell displaying program information for a first program.

12. The system recited in claim 11, wherein, in response to a user command to move said visual indicator (12; 80; 82) right, said visual indicator (12; 80; 82) is relocated to a new horizontal position said new horizontal position corresponding to an end time of said first program.

13. The system recited in claim 12, wherein, in response to said user command, said first active cell is deactivated, and a second cell becomes active, said second cell being located on the same row and to the right of previous said first active cell, said second cell displaying program information for a second program, said second program having a start time equal to said end time of said first program.

14. The system recited in claim 1, wherein, in response to a user command to move said visual indicator (12; 80; 82) left, said visual indicator (12; 80; 82) is relocated to a new horizontal position corresponding to the start time of said grid.

15. The system recited in claim 1, wherein, in response to said user command, said first active cell is deactivated, and a second cell becomes active;
said second cell being located to the left of said first active cell;
said second cell being the first cell appearing in said grid on said row.

16. The system recited in claim 1, wherein, in response to a user command to move said visual indicator (12; 80; 82) left, said visual indicator (12; 80; 82) is relocated to a new horizontal position corresponding to the start time of a second cell;
said second cell being located on the same row and to the left of said first active cell;
said second cell being immediately adjacent to said first active cell.

17. The system recited in claim 1, wherein, in response to said user command, said first active cell is deactivated, and said second cell becomes active.

18. A method of displaying an electronic program guide comprising:
displaying a program grid (10) including a plurality of cells, wherein each of said cells is associated with a particular program and can contain program information, said program grid (10) including one horizontal axis representing time and one vertical axis, wherein said plurality of cells comprises a plurality of columns disposed along a horizontal axis and at least one row disposed along a vertical axis; and
displaying a visual indicator (12; 80; 82) for indicating a currently active cell within said program grid (10) for displaying said program information contained in said currently active cell,
**characterized in that**
the position of said visual indicator (12; 80; 82) corresponds to a single point in time within said currently active cell, wherein said visual indicator (12; 80; 82) is movable along the horizontal axis and vertical axis;
displaying a portion of said visual indicator specifying said active cell is visually different from another portion of said visual indicator; and
moving said visual indicator relative to the axes in response to up, down, left or
right user commands, and each of these up, down, left or right user commands causes the visual indicator to move to and activate a different cell within the grid that is immediately adjacent to the currently active cell in correspondence to up, down, left or right user commands, and wherein in response to a single up, down, left or right user command, if the different cell to which the visual indicator is to be moved and which is to be activated is not currently visible in a currently displayed portion of the program grid, the single user command causes the system to scroll the plurality of cells in the program grid so that at least some part of the different cell is visible.

19. The method recited in claim 18, wherein said visual indicator is an information line (12).

20. The method recited in claim 19, wherein said information line (12) is vertically oriented.

21. The method recited in claim 19, further comprising intersecting said plurality of said cells with said information line (12).

22. The method recited in claim 21, wherein said information line (12) comprises a visually distinctive segment (18) for indicating said currently active cell.

23. The method recited in claim 18, wherein said visual indicator is an icon (82).

24. The method recited in claim 18, wherein said visual indicator is a visually distinctive graphical element (80).

25. The method recited in claim 18, further comprising providing a visual indication of an active row (20) within which said active cell is contained.

26. The method recited in claim 18 further comprising, relocating said visual indicator (12; 80; 82) to a new vertical position without changing said horizontal position in response to a user command to move said visual indicator (12; 80; 82) up.

27. The method recited in claim 18, further comprising, relocating said visual indicator (12; 80; 82) to a new vertical position without changing said horizontal position in response to a user command to move said visual indicator (12; 80; 82) down.

28. The method recited in claim 18, further comprising displaying a first active cell within said grid, wherein said first active cell displaying program information for a first program.

29. The method recited in claim 18, comprising relocating said visual indicator (12;
80; 82) to a new horizontal position that corresponds to an end time of said first program, in response to a user command to move said visual indicator (12; 80; 82) right.

30. The method recited in claim 18 further comprising, in response to said user command:
deactivating said first active cell;
activating a second cell, said second cell located on the same row and to the right of said first active cell;
displaying program information for a second program in said second cell, wherein said second program having a start time equal to said end time of said first program.

31. The method recited in claim 18 comprising, relocating said visual indicator (12; 80; 82) to a new horizontal position corresponding to the start time of said grid, in response to a user command to move said visual indicator (12; 80; 82) left.

32. The method recited in claim 18 further comprising, in response to said user command:
deactivating said first active cell; and
activating a second cell, said second cell being located to the left of said first active cell, wherein said second cell being the first cell appearing in said grid on said row.

33. The method recited in claim 18, comprising relocating said visual indicator (12; 80; 82) to a new horizontal position corresponding to the start time of a second cell, in response to a user command to move said visual indicator (12; 80; 82) left, wherein said second cell being located on the same row and to the left of said first active cell, and wherein said second cell being immediately adjacent to said first active cell.

34. The method recited in claim 18, further comprising, in response to said user command:
deactivating said first active cell; and
activating said second cell.

## Patentansprüche

1. Elektronisches Programmführersystem, aufweisend:
ein Programmraster (10), das eine Mehrzahl von Zellen aufweist, wobei jede von den Zellen eines bestimmten Programms zugeordnet ist und Programminformationen enthalten kann; und
einen visuellen Zeiger (12; 80; 82) zum Angeben einer gerade aktiven Zelle innerhalb des Programmrasters (10) zum Anzeigen der Programminformationen, die in der gerade aktiven Zelle enthalten sind;
wobei das Programmraster (10) eine horizontale Achse, welche die Zeit darstellt, und eine vertikale Achse aufweist, wobei die Mehrzahl von Zellen eine Mehrzahl von Spalten, die entlang einer horizontalen Achse angeordnet sind, und mindestens eine Zeile umfasst, die entlang einer vertikalen Achse angeordnet ist;
**dadurch gekennzeichnet, dass**
die Position des visuellen Zeigers (12; 80; 82) einem einzelnen Zeitpunkt innerhalb der gerade aktiven Zelle entspricht, wobei der visuelle Zeiger (12; 80; 82) entlang der horizontalen Achse und der vertikalen Achse bewegt werden kann; wobei ein Abschnitt des visuellen Zeigers, der die aktive Zelle angibt, sich visuell von einem anderen Abschnitt des visuellen Zeigers unterscheidet; und
wobei der visuelle Zeiger als Antwort auf Befehle eines Anwenders in Bezug auf die Achsen bewegt werden kann, und jeder Aufwärts-, Abwärts-, Nach-links- oder Nach-rechts-Befehl des Anwenders bewirkt, dass der visuelle Zeiger sich zu einer anderen, der gerade aktiven Zelle benachbarten Zelle innerhalb des Rasters bewegt und sie aktiviert, und wobei als Antwort auf einen einzelnen Befehl des Anwenders, wenn die andere Zelle in einem gerade angezeigten Teil des Programmrasters gerade nicht sichtbar ist, der einzelne Befehl des Anwenders bewirkt, dass das System die über Mehrzahl von Zellen im Programmraster scrollt, so dass zumindest ein Teil der anderen Zelle sichtbar ist.

2. System nach Anspruch 1, wobei der visuelle Zeiger eine Informationslinie (12) ist.

3. System nach Anspruch 2, wobei die Informationslinie (12) vertikal ausgerichtet ist.

4. System nach Anspruch 2, wobei die Informationslinie (12) eine Mehrzahl der Zellen schneidet.

5. System nach Anspruch 4, wobei die Informationslinie (12) ein visuell unterscheidbares Segment (18; 70) zum Angeben der gerade aktiven Zelle aufweist.

6. System nach Anspruch 1, wobei der visuelle Zeiger ein Bildzeichen (82) ist.

7. System nach Anspruch 1, wobei der visuelle Zeiger ein visuell unterscheidbares grafisches Element (80) ist.

8. System nach Anspruch 1, ferner eine visuelle Angabe einer aktiven Zeile (20), in der die aktive Zelle enthalten ist, aufweisend.

9. System nach Anspruch 1, wobei als Antwort auf einen Befehl des Anwenders zum Aufwärtsbewegen des visuellen Zeigers (12; 80; 82) der visuelle Zeiger (12; 80; 82) in eine neue vertikale Position gebracht wird, ohne die horizontale Position zu ändern.

10. System nach Anspruch 1, wobei als Antwort auf einen Befehl eines Anwenders zum Abwärtsbewegen des visuellen Zeigers (12; 80; 82) der visuelle Zeiger (12; 80; 82) in eine neue vertikale Position gebracht wird, ohne die horizontale Position zu ändern.

11. System nach Anspruch 1, wobei eine erste aktive Zelle innerhalb des Rasters angegeben ist, wobei die erste aktive Zelle Programminformationen für ein erstes Programm anzeigt.

12. System nach Anspruch 11, wobei als Antwort auf einen Befehl eines Anwenders zum Nach-rechts-Bewegen des visuellen Zeigers (12; 80; 82) der visuelle Zeiger (12; 80; 82) in eine neue horizontale Position gebracht wird, wobei die neue horizontale Position einem Endzeitpunkt des ersten Programms entspricht.

13. System nach Anspruch 12, wobei als Antwort auf den Befehl eines Anwenders die erste aktive Zelle deaktiviert wird und eine zweite Zelle aktiv wird, wobei die zweite Zelle sich in der gleichen Zeile und rechts von der zuvor aktiven ersten Zelle befindet, wobei die zweite Zelle Programminformationen für ein zweites Programm anzeigt, wobei das zweite Programm einen Startzeitpunkt aufweist, der dem Endzeitpunkt des ersten Programms gleich ist.

14. System nach Anspruch 1, wobei als Antwort auf einen Befehl eines Anwenders zum Nach-links-Bewegen des visuellen Zeigers (12; 80; 82) der visuelle Zeiger (12; 80; 82) in eine neue horizontale Position gebracht wird, die dem Startzeitpunkt des Rasters entspricht.

15. System nach Anspruch 1, wobei als Antwort auf den Befehl eines Anwenders die erste aktive Zelle deaktiviert wird und eine zweite Zelle aktiv wird;
wobei die zweite Zelle sich links von der ersten aktiven Zelle befindet;
wobei die zweite Zelle die erste Zelle ist, die in dem Raster in dieser Zeile erscheint.

16. System nach Anspruch 1, wobei als Antwort auf einen Befehl eines Anwenders zum Nach-links-Bewegen des visuellen Zeigers (12; 80; 82) der visuelle Zeiger (12; 80; 82) in eine neue horizontale Position gebracht wird, die dem Startzeitpunkt einer zweiten Zelle entspricht;
wobei die zweite Zelle sich in der gleichen Zeile und links von der ersten aktiven Zelle befindet;
wobei die zweite Zelle der ersten aktiven Zelle unmittelbar benachbart ist.

17. System nach Anspruch 1, wobei als Antwort auf den Befehl eines Anwenders die erste aktive Zelle deaktiviert wird und die zweite Zelle aktiv wird.

18. Verfahren zum Anzeigen eines elektronischen Programmführers, umfassend:
Anzeigen eines Programmrasters (10), das eine Mehrzahl von Zellen aufweist, wobei jede von den Zellen einem bestimmten Programm zugeordnet ist und Programminformationen enthalten kann; wobei das Programmraster (10) eine horizontale Achse, welche die Zeit darstellt, und eine vertikale Achse aufweist, wobei die Mehrzahl von Zellen eine Mehrzahl von Spalten, die entlang einer horizontalen Achse angeordnet sind, und mindestens eine Zeile, die entlang einer vertikalen Achse angeordnet ist, aufweist; und
Anzeigen eines visuellen Zeigers (12; 80; 82) zum Angeben einer gerade aktiven Zelle innerhalb des Programmrasters (10) zum Anzeigen der Programminformationen, die in der gerade aktiven Zelle enthalten sind;
**dadurch gekennzeichnet, dass**
die Position des visuellen Zeigers (12; 80; 82) einem einzelnen Zeitpunkt innerhalb der gerade aktiven Zelle entspricht, wobei der visuelle Zeiger (12; 80; 82) entlang der horizontalen Achse und der vertikalen Achse bewegt werden kann;
ein angezeigter Abschnitt des visuellen Zeigers, der die aktive Zelle angibt, sich visuell von einem anderen Abschnitt des visuellen Zeigers unterscheidet; und
der visuelle Zeiger als Antwort auf Aufwärts-, Abwärts-, Nach-links- oder Nach-rechts-Befehle eines Anwenders in Bezug auf die Achsen bewegt wird, und jeder dieser Aufwärts-, Abwärts-, Nach-links- oder Nach-rechts-Befehle des Anwenders bewirkt, dass der visuelle Zeiger sich entsprechend den Aufwärts-, Abwärts-, Nach-links- oder Nach-rechts-Befehlen des Anwenders zu einer anderen, der gerade aktiven Zelle unmittelbar benachbarten Zelle innerhalb des Rasters bewegt und sie aktiviert, und wobei als Antwort auf einen einzelnen Aufwärts-, Abwärts-, Nach-links- oder Nach-rechts-Befehl des Anwenders, wenn die andere Zelle, zu der der visuelle Zeiger bewegt werden soll und die aktiviert werden soll, in einem gerade angezeigten Abschnitt des Programmrasters gerade nicht sichtbar ist, der einzelne Anwenderbefehl bewirkt, dass das System über die Mehrzahl von Zellen im Programmraster scrollt, so dass zumindest ein Teil der anderen Zelle sichtbar ist.

19. Verfahren nach Anspruch 18, wobei der visuelle Zeiger eine Informationslinie (12) ist.

20. Verfahren nach Anspruch 19, wobei die Informationslinie (12) vertikal ausgerichtet ist.

21. Verfahren nach Anspruch 19, ferner beinhaltend, dass die Mehrzahl der Zellen von der Informationslinie (12) geschnitten wird.

22. Verfahren nach Anspruch 21, wobei die Informationslinie (12) ein visuell unterscheidbares Segment (18; 70) zum Angeben der gerade aktiven Zelle aufweist.

23. Verfahren nach Anspruch 18, wobei der visuelle Zeiger ein Bildzeichen (82) ist.

24. Verfahren nach Anspruch 18, wobei der visuelle Zeiger ein visuell unterscheidbares grafisches Element (80) ist.

25. Verfahren nach Anspruch 18, ferner beinhaltend, dass eine visuelle Kennzeichnung einer aktiven Zeile (20), in der die aktive Zelle enthalten ist, vorgesehen wird.

26. Verfahren nach Anspruch 18, ferner beinhaltend, dass als Antwort auf einen Befehl des Anwenders zum Aufwärtsbewegen des visuellen Zeigers (12; 80; 82) der visuelle Zeiger (12; 80; 82) in eine neue vertikale Position gebracht wird, ohne die horizontale Position zu ändern.

27. Verfahren nach Anspruch 18, ferner beinhaltend, dass als Antwort auf einen Befehl des Anwenders zum Abwärtsbewegen des visuellen Zeigers (12; 80; 82) der visuelle Zeiger (12; 80; 82) in eine neue vertikale Position gebracht wird, ohne die horizontale Position zu ändern.

28. Verfahren nach Anspruch 18, ferner beinhaltend, dass eine erste aktive Zelle innerhalb des Rasters angezeigt wird, wobei die erste aktive Zelle Programminformationen für ein erstes Programm anzeigt.

29. Verfahren nach Anspruch 18, beinhaltend, dass als Antwort auf einen Befehl des Anwenders zum Nach-rechts-Bewegen des visuellen Zeigers (12; 80; 82) der visuelle Zeiger (12; 80; 82) in eine neue horizontale Position gebracht wird, die einem Endzeitpunkt des ersten Programms entspricht.

30. Verfahren nach Anspruch 18, ferner beinhaltend, dass als Antwort auf den Befehl des Anwenders:
die erste aktive Zelle deaktiviert wird;
eine zweite Zelle aktiviert wird, wobei die zweite Zelle sich in der gleichen Zeile und rechts von der ersten aktiven Zelle befindet;
Programminformationen für ein zweites Programm in der zweiten aktiven Zelle angezeigt werden, wobei das zweite Programm einen Startzeitpunkt aufweist, der dem Endzeitpunkt des ersten Programms gleich ist.

31. Verfahren nach Anspruch 18, beinhaltend, dass als Antwort auf einen Befehl eines Anwenders zum Nach-links-Bewegen des visuellen Zeigers (12; 80; 82) der visuelle Zeiger (12; 80; 82) in eine neue horizontale Position gebracht wird, die dem Startzeitpunkt des Rasters entspricht.

32. Verfahren nach Anspruch 18, ferner beinhaltend, dass als Antwort auf den Befehl des Anwenders:
die erste aktive Zelle deaktiviert wird; und
eine zweite Zelle aktiviert wird, wobei die zweite Zelle sich links von der ersten aktiven Zelle befindet, wobei die zweite Zelle die erste Zelle ist, die in dem Raster in dieser Zeile erscheint.

33. Verfahren nach Anspruch 18, beinhaltend, dass als Antwort auf einen Befehl eines Anwenders zum Nach-links-Bewegen des visuellen Zeigers (12; 80; 82) der visuelle Zeiger (12; 80; 82) in eine neue horizontale Position gebracht wird, die dem Startzeitpunkt einer zweiten Zelle entspricht, wobei die zweite Zelle sich in der gleichen Zeile und links von der ersten aktiven Zelle befindet, und wobei die zweite Zelle der ersten aktiven Zelle unmittelbar benachbart ist.

34. Verfahren nach Anspruch 18, ferner beinhaltend, dass als Antwort auf den Befehl des Anwenders:
die erste aktive Zelle deaktiviert wird; und
die zweite Zelle aktiviert wird.

## Revendications

1. Système de guide de programme électronique, comprenant :
une grille de programmes (10) incluant plusieurs cellules, chacune des cellules étant associée à un programme particulier et pouvant contenir des informations de programme ; et
un indicateur visuel (12 ; 80 ; 82) pour indiquer une cellule couramment active de la grille de programmes (10) pour afficher les informations de programme contenues dans la cellule couramment active ;
la grille de programmes (10) comprenant un axe horizontal représentant le temps et un axe vertical, lesdites plusieurs cellules comprenant plusieurs colonnes disposées le long d'un axe horizontal et au moins une rangée disposée le long d'un axe vertical ;
**caractérisé en ce que**
la position de l'indicateur visuel (12 ; 80 ; 82) correspond à un point unique dans le temps dans la cellule couramment active, l'indicateur visuel (12 ; 80 ; 82) étant mobile le long de l'axe horizontal et de l'axe vertical ; une partie de l'indicateur visuel déterminant que la cellule active est visuellement différente d'une autre partie de l'indicateur visuel ; et
l'indicateur visuel étant mobile par rapport aux axes en réponse à des instructions d'utilisateur, et chaque instruction d'utilisateur d'aller vers le haut, vers le bas, à gauche ou à droite amène l'indicateur visuel à se déplacer vers, et à activer, une cellule différente de la grille qui est adjacente à la cellule couramment active, et en réponse à une instruction d'utilisateur unique, si la cellule différente n'est pas couramment visible dans une partie couramment affichée de la grille de programmes, l'instruction d'utilisateur unique amène le système à faire défiler les plusieurs cellules de la grille de programmes de sorte qu'au moins une certaine partie de la cellule différente est visible.

2. Système selon la revendication 1, **caractérisé en ce que** l'indicateur visuel est une ligne d'informations (12).

3. Système selon la revendication 2, **caractérisé en ce que** la ligne d'informations (12) est orientée verticalement.

4. Système selon la revendication 2, **caractérisé en ce que** la ligne d'informations (12) regroupe plusieurs cellules.

5. Système selon la revendication 4, **caractérisé en ce que** la ligne d'informations (12) comprend un segment visuellement distinctif (18 ; 70) pour indiquer la cellule couramment active.

6. Système selon la revendication 1, **caractérisé en ce que** l'indicateur visuel est une icône (82).

7. Système selon la revendication 1, **caractérisé en ce que** l'indicateur visuel est un élément graphique visuellement distinctif (80).

8. Système selon la revendication 1, comprenant de plus une indication visuelle d'une rangée active (20) dans laquelle la cellule active est contenue.

9. Système selon la revendication 1, **caractérisé en ce que**, en réponse à une instruction d'utilisateur de déplacer l'indicateur visuel (12 ; 80 ; 82) vers le haut, l'indicateur visuel (12 ; 80 ; 82) est repositionné dans une nouvelle position verticale sans changer la position horizontale.

10. Système selon la revendication 1, **caractérisé en ce que**, en réponse à une instruction d'utilisateur de déplacer l'indicateur visuel (12 ; 80 ; 82) vers le bas, l'indicateur visuel (12 ; 80 ; 82) est repositionné dans une nouvelle position verticale sans changer la position horizontale.

11. Système selon la revendication 1, **caractérisé en ce qu'**une première cellule active de la grille est indiquée, la première cellule active affichant des informations de programme pour un premier programme.

12. Système selon la revendication 11, **caractérisé en ce qu'**en réponse à une instruction d'utilisateur de déplacer l'indicateur visuel (12 ; 80 ; 82) vers la droite, l'indicateur visuel (12 ; 80 ; 82) est repositionné dans une nouvelle position horizontale, la nouvelle position horizontale correspondant à un temps de fin du premier programme.

13. Système selon la revendication 12, **caractérisé en ce que** en réponse à l'instruction d'utilisateur, la première cellule active est désactivée, et une seconde cellule devient active, la seconde cellule étant située sur la même rangée et vers la droite de la première cellule active précédente, la seconde cellule affichant des informations de programme pour un second programme, le second programme ayant un temps de début égal au temps de fin du premier programme.

14. Système selon 1a revendication 1, **caractérisé en ce que**, en réponse à une instruction d'utilisateur de déplacer l'indicateur visuel (12 ; 80 ; 82) vers la gauche, l'indicateur visuel (12 ; 80 ; 82) est repositionné dans une nouvelle position horizontale correspondant au temps de début de la grille.

15. Système selon la revendication 1, **caractérisé en ce que**, en réponse à une instruction d'utilisateur, la première cellule active est désactivée et une seconde cellule devient active ; la seconde cellule étant située sur la gauche de la première cellule active ; la seconde cellule étant la première cellule apparaissant dans la grille sur la dite rangée.

16. Système selon la revendication 1, **caractérisé en ce que**, en réponse à une instruction d'utilisateur pour déplacer un indicateur visuel (12 ; 80 ; 82) vers la gauche l'indicateur visuel (12 ; 80 ; 82) est repositionné dans une nouvelle position horizontale correspondant au temps de début d'une seconde cellule ; la seconde cellule étant située sur la même rangée et vers la gauche de la première cellule active ;
la seconde cellule étant immédiatement adjacente à la première cellule active.

17. Système selon la revendication 1, **caractérisé en ce que**, en réponse à une instruction d'utilisateur, la première cellule active est désactivée, et la seconde cellule devient active.

18. Procédé d'affichage d'un guide de programmes électronique comprenant les étapes consistant à :
afficher une grille de programmes (10) comprenant plusieurs cellules, chacune des cellules étant associée à un programme particulier et pouvant contenir des informations de programme, la grille de programmes (10) comprenant un axe horizontal représentant le temps et un axe vertical, les plusieurs cellules comprenant une pluralité de colonnes disposées le long d'un axe horizontal et au moins une rangée disposée le long d'un axe vertical ; et
afficher un indicateur visuel (12 ; 80 ; 82) pour indiquer une cellule couramment active de la grille de programmes (10) pour afficher l'information de programme contenue dans la cellule couramment active,
**caractérisé en ce que**
la position de l'indicateur visuel (12 ; 80 ; 82) correspond à un point unique dans le temps dans la cellule couramment active, l'indicateur visuel (12 ; 80 ; 82) étant mobile le long de l'axe horizontal et de l'axe vertical ;
une partie de l'indicateur visuel déterminant que la cellule active est visuellement différente d'une autre partie de l'indicateur visuel est affichée, et l'indicateur visuel est déplacé par rapport aux axes en réponse à des instructions d'utilisateur d'aller vers le haut, vers le bas, vers la gauche ou vers la droite, et chacune de ces instructions d'utilisateur d'aller vers le haut, vers le bas, vers la gauche ou vers la droite amène l'indicateur visuel à se déplacer vers, et activer, une cellule différente de la grille qui est immédiatement adjacente à la cellule couramment active en correspondance avec des instructions d'utilisateur d'aller vers le haut, vers le bas, vers la gauche ou vers la droite, et où en réponse à une instruction d'utilisateur unique d'aller vers le haut, vers le bas, vers la gauche ou vers la droite, si la cellule différente vers laquelle l'indicateur visuel doit-être déplacé et qui doit être activée n'est pas couramment visible dans une partie couramment affichée de la grille de programmes, l'instruction d'utilisateur unique amène le système à faire défiler les plusieurs cellules de la grille de programmes de sorte qu'au moins une certaine partie de la cellule différente soit visible.

19. Procédé selon la revendication 18, **caractérisé en ce que** l'indicateur visuel est une ligne d'informations (12).

20. Procédé selon la revendication 19, **caractérisé en ce que** la ligne d'informations (12) est orientée verticalement.

21. Procédé selon la revendication 19, **caractérisé en ce qu'**il comprend de plus l'intersection de la pluralité de cellules avec la ligne d'informations (12).

22. Procédé selon la revendication 21, dans lequel la ligne d'informations (12) comporte un segment visuellement distinctif (18) pour indiquer la cellule couramment active.

23. Procédé selon la revendication 18, **caractérisé en ce que** l'indicateur visuel est une icône (82).

24. Procédé selon la revendication 18, **caractérisé en ce que** l'indicateur visuel est un élément graphique visuellement distinctif (80).

25. Procédé selon la revendication 18, **caractérisé en ce qu'**il consiste à fournir de plus une indication visuelle d'une rangée active (20) dans laquelle la cellule active est contenue.

26. Procédé selon la revendication 18, **caractérisé en ce qu'**il comporte de plus, un repositionnement de l'indicateur visuel (12 ; 80 ; 82) vers une nouvelle position verticale sans changer la position horizontale en réponse à une instruction d'utilisateur de déplacer l'indicateur visuel (12 ; 80 ; 82) vers le haut.

27. Procédé selon la revendication 18, **caractérisé en ce qu'**il comprend de plus, le repositionnement de l'indicateur visuel (12 ; 80 ; 82) vers une nouvelle position verticale sans changer la position horizontale en réponse à une instruction d'utilisateur de déplacer l'indicateur visuel (12 ; 80 ; 82) vers le bas.

28. Procédé selon la revendication 18, **caractérisé en ce qu'**il comporte de plus l'affichage d'une première cellule active de la grille, la première cellule active affichant des informations de programme pour un premier programme.

29. Procédé selon la revendication 18, **caractérisé en ce qu'**il comprend le repositionnement de l'indicateur visuel (12 ; 80 ; 82) vers une nouvelle position horizontale qui correspond à un temps de fin du premier programme, en réponse à une instruction d'utilisateur de déplacer l'indicateur visuel (12 ; 80 ; 82) vers la droite.

30. Procédé selon la revendication 18, **caractérisé en ce qu'**il comprend de plus, en réponse à une instruction d'utilisateur :
la désactivation de la première cellule active ;
l'activation d'une seconde cellule, la seconde cellule étant positionnée sur la même rangée et vers la droite de la première cellule active ;
l'affichage d'informations de programme pour un second programme situé dans la seconde cellule, le second programme ayant un temps de début égal au temps de fin du premier programme.

31. Procédé selon la revendication 18, **caractérisé en ce qu'**il comprend le repositionnement de l'indicateur visuel (12 ; 80 ; 82) vers une nouvelle position horizontale correspondant au temps de début de la grille en réponse à une instruction d'utilisateur de déplacer l'indicateur visuel (12 ; 80 ; 82) vers la gauche.

32. Procédé selon la revendication 18, **caractérisé en ce qu'**il comprend de plus, en réponse à l'instruction d'utilisateur :
la désactivation de la première cellule active ; et
l'activation d'une seconde cellule, la seconde cellule étant positionnée sur la gauche de la première cellule active, la seconde cellule étant la première cellule apparaissant dans la grille sur la rangée.

33. Procédé selon le revendication 18, **caractérisé en ce qu'**il comprend le repositionnement de l'indicateur visuel (12 ; 80 ; 82) vers une nouvelle position horizontale correspondant au temps de début d'une seconde cellule, en réponse à une instruction d'utilisateur de déplacer l'indicateur visuel (12 ; 80 ; 82) vers la gauche, la seconde cellule étant située sur la même rangée et vers la gauche de la première cellule active, et la seconde cellule étant immédiatement adjacente à la première cellule active.

34. Procédé selon la revendication 18, **caractérisé en ce qu'**il comprend de plus en réponse à l'instruction d'utilisateur :
la désactivation de la première cellule active ; et
l'activation de la seconde cellule.
